# EUROPÄISCHE PATENTSCHRIFT

(11) **EP 2 844 398 B1**
(45) Veröffentlichungstag und Bekanntmachung des Hinweises auf die Patenterteilung: **31.05.2017**
(21) Anmeldenummer: 13718845.4
(22) Anmeldetag: 26.04.2013
(51) Int. Cl.: B05B 13/02, B05B 15/12

(54) **QUERTRÄGER MIT INTEGRIERTEM ANTRIEB ZUR FÖRDERUNG VON GEGENSTÄNDEN**
CROSS MEMBER WITH INTEGRATED DRIVE FOR CONVEYING OBJECTS
TRAVERSE AVEC ENTRAÎNEMENT INTEGRE POUR TRANSPORTER DES OBJETS

(30) Priorität: 03.05.2012 DE 102012207389
(43) Veröffentlichungstag der Anmeldung: 11.03.2015
(73) Patentinhaber: Dürr Systems AG, 74321 Bietigheim-Bissingen (DE)
(72) Erfinder: FEDERMANN, Andreas, 70563 Stuttgart (DE); REIBER, Mario, 74343 Sachsenheim (DE); BAITINGER, Michael, 71672 Marbach (DE); CASPARI, Samuel, 51709 Marienheide (DE)
(74) Vertreter: Hoeger, Stellrecht & Partner Patentanwälte mbB
(86) Internationale Anmeldenummer: PCT/EP2013/058717
(87) Internationale Veröffentlichungsnummer: WO 2013/164262

(56) Entgegenhaltungen:
- WO-A1-2006/105975
- DE-A1-102004 056 404
- DE-A1-102008 036 550
- DE-C1- 4 107 224
- DE-U1- 9 400 343
- US-A1- 2004 081 753

## Beschreibung

Die vorliegende Erfindung betrifft eine Querträgervorrichtung für eine Bodengruppe eines Beschichtungs- und/oder Bearbeitungsraums.

Ein Beschichtungs- und/oder Bearbeitungsraum kann beispielsweise ein Lackierraum einer Lackieranlage sein. Eine Bodengruppe der Lackieranlage ist dann vorzugsweise luftdurchlässig, so dass beim Applizieren von Lack auf Werkstücke entstehender Lack-Overspray durch die Bodengruppe hindurch abgesaugt werden kann. Die Bodengruppe und sämtliche auf der Bodengruppe montierten Bauteile können hierbei unerwünschterweise mit Lack-Overspray beaufschlagt werden. Beispielsweise kann eine Fördervorrichtung zum Fördern von Werkstücken hierdurch in ihrer Funktion und Zuverlässigkeit beeinträchtigt werden.

Die WO 2006/105975 A1 offenbart eine Transporteinrichtung zum Transport flächiger Substrate durch eine Beschichtungsanlage.

Die DE 10 2004 056 404 A1 offenbart eine Fördervorrichtung, welche in einen Boden eines Trockners integriert ist.

Der vorliegenden Erfindung liegt die Aufgabe zugrunde, eine Querträgervorrichtung für eine Bodengruppe eines Beschichtungs- und/oder Bearbeitungsraums bereitzustellen, mittels welcher Bauteile einer Antriebsvorrichtung für eine Fördervorrichtung vor unerwünschten Verunreinigungen geschützt werden können.

Diese Aufgabe wird erfindungsgemäß durch eine Querträgervorrichtung gemäß Anspruch 1 gelöst.

Dadurch, dass bei der erfindungsgemäßen Querträgervorrichtung das Antriebselement zumindest abschnittsweise in dem Innenraum des Querträgers angeordnet ist, ist das Antriebselement der Antriebsvorrichtung vor unerwünschten Verunreinigungen geschützt.

Unter einem Querträger ist in dieser Beschreibung und in den beigefügten Ansprüchen insbesondere ein tragendes Element einer Bodengruppe zu verstehen, welches sich im montierten Zustand einer Beschichtungs- und/oder Bearbeitungsanlage quer, insbesondere im Wesentlichen senkrecht, zu einer Längsrichtung der Beschichtungs- und/oder Bearbeitungsanlage und/oder zu einer Förderrichtung der Fördervorrichtung erstreckt.

Vorzugsweise ist das Antriebselement im Wesentlichen vollständig in dem Innenraum des Querträgers angeordnet. Auf diese Weise ist das Antriebselement besonders gut vor unerwünschten Verunreinigungen geschützt.

Das Antriebselement ist vorzugsweise in den Querträger integriert.

Günstig kann es sein, wenn der Querträger eine Einhausung für zumindest einen Abschnitt des kraftübertragenden Antriebselements bildet. Der Querträger umgibt das Antriebselement vorzugsweise zumindest abschnittsweise mindestens dreiseitig.

Die Querträgervorrichtung eignet sich insbesondere zur Verwendung in einer luftdurchlässigen Bodengruppe eines Beschichtungs- und/oder Bearbeitungsraums. Insbesondere eignet sich die Querträgervorrichtung zur Verwendung in einer Bodengruppe, durch welche eine Luftabsaugung möglich ist.

Unter einem kraftübertragenden Antriebselement ist in dieser Beschreibung und den beigefügten Ansprüchen insbesondere ein drehmomentübertragendes Antriebselement zu verstehen. Beispielsweise kann vorgesehen sein, dass das kraftübertragende Antriebselement eine Drehbewegung überträgt.

Eine Bearbeitung im Sinne der vorliegenden Beschreibung und der beigefügten Ansprüche ist insbesondere eine mechanische Bearbeitung eines Werkstücks.

Bei einer Ausgestaltung der Erfindung ist vorgesehen, dass die Querträgervorrichtung eine Tragrollenaufnahme für eine Tragrolle der Fördervorrichtung umfasst.

Die Tragrollenaufnahme ist vorzugsweise an dem Querträger angeordnet, insbesondere in den Querträger integriert.

Vorzugsweise ist die Tragrollenaufnahme zumindest abschnittsweise, vorzugsweise im Wesentlichen vollständig, in dem Innenraum des Querträgers angeordnet.

Mittels der Tragrollenaufnahme ist die Tragrolle vorzugsweise drehbar gelagert.

Günstig kann es sein, wenn der Querträger mindestens zwei bezüglich einer Längsrichtung des Querträgers hintereinander angeordnete Querträgerabschnitte aufweist, welche in einer quer, insbesondere im Wesentlichen senkrecht, zur Längsrichtung verlaufenden Querrichtung des Querträgers versetzt zueinander angeordnet sind.

Die Längsrichtung des Querträgers ist im montierten Zustand der Querträgervorrichtung insbesondere eine Querrichtung der Beschichtungs- und/oder Bearbeitungsanlage, insbesondere des Beschichtungs- und/oder Bearbeitungsraumes.

Eine Querrichtung des Querträgers ist eine quer, insbesondere im Wesentlichen senkrecht, zur Längsrichtung verlaufende Richtung. Beispielsweise ist die Querrichtung im montierten Zustand der Querträgervorrichtung eine vertikale oder horizontale Richtung.

Günstig kann es sein, wenn der Querträger einen Querträgerabschnitt aufweist, welcher in vertikaler Richtung zum Beschichtungs- und/oder Bearbeitungsbereich hin oder von dem Beschichtungs- und/oder Bearbeitungsbereich weg versetzt ist.

Die Längsrichtung des Querträgers ist vorzugsweise die Haupterstreckungsrichtung des Querträgers, d.h. diejenige Richtung, in welcher der Querträger im montierten Zustand die größte Ausdehnung aufweist.

Die Querrichtung des Querträgers ist vorzugsweise die Längsrichtung des Beschichtungs- und/oder Bearbeitungsraums und/oder die Förderrichtung der Fördervorrichtung.

Der Querträger weist vorzugsweise einen quer zu einer Längsrichtung des Querträgers verlaufenden Querträgerabschnitt auf. Insbesondere kann vorgesehen sein, dass der Querträger einen im Wesentlichen senkrecht zu einer Längsrichtung des Querträgers verlaufenden Querträgerabschnitt aufweist.

Bei einer Ausgestaltung der Erfindung ist vorgesehen, dass der Querträger zwei quer zu einer Längsrichtung des Querträgers verlaufende Querträgerabschnitte und einen bezüglich einer senkrecht zur Längsrichtung verlaufenden Querrichtung versetzt angeordneten, parallel zur Längsrichtung verlaufenden Querträgerabschnitt umfasst, welcher zwischen den zwei quer zur Längsrichtung des Querträgers verlaufenden Querträgerabschnitten angeordnet ist. Auf diese Weise ist insbesondere ein von einer direkten Verbindungslinie zweier Anbindungspunkte der Querträger an den Enden des Querträgers seitlich versetzt angeordneter Querträgerabschnitt gebildet.

Vorzugsweise liegt mindestens ein Querträgerabschnitt des Querträgers neben einer direkten Verbindungslinie zwischen den Anbindungspunkten des Querträgers an den Enden des Querträgers.

Unter einem Querträgerabschnitt ist insbesondere ein Abschnitt des Querträgers zu verstehen, längs welchem Kräfte zwischen den Enden des Querträgers übertragen werden. Ein Querträgerabschnitt ist somit insbesondere ein Abschnitt eines Lastpfads des Querträgers.

Vorzugsweise weist der Querträger eine im Wesentlichen U-förmige Struktur auf. Der Querträgerabschnitt umfasst hierzu vorzugsweise zwei quer, insbesondere im Wesentlichen senkrecht, zur Längsrichtung verlaufende Querträgerabschnitte und einen vorzugsweise im Wesentlichen parallel zu der Längsrichtung verlaufenden Querträgerabschnitt, welcher zwischen den quer zur Längsrichtung verlaufenden Querträgerabschnitten angeordnet ist.

Die im Wesentlichen U-förmige Struktur des Querträgers steht vorzugsweise in im Wesentlichen vertikaler Richtung nach unten oder in im Wesentlichen vertikaler Richtung nach oben hervor.

Bei einer Ausgestaltung der Erfindung ist vorgesehen, dass die Querträgervorrichtung eine Tragrolle der Fördervorrichtung und eine Kopplungsvorrichtung zum Koppeln der Tragrolle mit dem Antriebselement umfasst.

Die Kopplungsvorrichtung kann beispielsweise einen Zahnriemen und/oder eine Kette umfassen.

Mittels der Kopplungsvorrichtung kann insbesondere eine Kraft, ein Drehmoment und/oder eine Drehbewegung von dem Antriebselement auf die Tragrolle übertragen werden.

Günstig kann es sein, wenn die Querträgervorrichtung eine Welle für zwei oder mehr Tragrollen umfasst.

Vorteilhaft kann es sein, wenn die Querträgervorrichtung eine Tragrolle der Fördervorrichtung umfasst, wobei eine Drehachse der Tragrolle gegenüber einer Drehachse des Antriebselements in einer quer, insbesondere im Wesentlichen senkrecht, zu einer Längsrichtung des Querträgers verlaufenden Querrichtung des Querträgers versetzt angeordnet ist.

Insbesondere kann vorgesehen sein, dass eine Drehachse der Tragrolle und eine Drehachse des Antriebselements im Wesentlichen parallel zueinander verlaufen.

Die Querträgervorrichtung umfasst vorzugsweise mindestens zwei Tragrollen und/oder mindestens zwei zumindest abschnittsweise in dem Innenraum des Querträgers angeordnete kraftübertragende Antriebselemente.

Günstig kann es sein, wenn die Querträgervorrichtung eine Lagervorrichtung zur drehbaren Lagerung des kraftübertragenden Antriebselements umfasst.

Die Lagervorrichtung ist vorzugsweise zumindest teilweise, insbesondere im Wesentlichen vollständig, in dem Innenraum des Querträgers angeordnet. Insbesondere kann vorgesehen sein, dass die Lagervorrichtung zumindest teilweise, insbesondere im Wesentlichen vollständig, in den Querträger integriert ist.

Das Antriebselement kann beispielsweise als eine Welle ausgebildet sein. Insbesondere kann vorgesehen sein, dass das Antriebselement als eine Kardanwelle ausgebildet ist.

Die Querträgervorrichtung umfasst vorzugsweise ein Paar von Tragrollen, wobei eine oder beide Tragrollen des Paars von Tragrollen zum Antreiben derselben mit dem Antriebselement verbunden sind.

Beispielsweise kann vorgesehen sein, dass ein Paar von Tragrollen vorgesehen ist, wobei die beiden Tragrollen unabhängig voneinander drehbar angeordnet sind. Insbesondere kann vorgesehen sein, dass die beiden Tragrollen des Paars von Tragrollen unabhängig voneinander antreibbar sind. Jede Tragrolle der beiden Tragrollen kann hierzu mit einem anderen Antriebselement verbunden sein.

Bei einer Ausgestaltung der Erfindung ist vorgesehen, dass die Querträgervorrichtung ein Paar von Tragrollen umfasst, wobei die beiden Tragrollen des Paars von Tragrollen mittels einer gemeinsamen Welle drehfest miteinander verbunden sind. Durch eine Kopplung der Welle mit dem Antriebselement kann das Paar von Tragrollen auf diese Weise besonders einfach angetrieben werden.

Die erfindungsgemäße Querträgervorrichtung eignet sich insbesondere zur Verwendung in einer Bodengruppe für einen Beschichtungs- und/oder Bearbeitungsraum.

Die vorliegende Erfindung betrifft ferner eine Bodengruppe eines Beschichtungs- und/oder Bearbeitungsraums, insbesondere einer Beschichtungs- und/oder Bearbeitungsanlage.

Der Erfindung liegt diesbezüglich die Aufgabe zugrunde, eine Bodengruppe bereitzustellen, mittels welcher Bauteile einer Antriebsvorrichtung für eine Fördervorrichtung vor unerwünschten Verunreinigungen geschützt werden können.

Diese Aufgabe wird erfindungsgemäß dadurch gelöst, dass eine Bodengruppe für einen Beschichtungs- und/oder Bearbeitungsraum, insbesondere für eine Beschichtungs- und/oder Bearbeitungsanlage, mindestens eine erfindungsgemäße Querträgervorrichtung umfasst.

Die Bodengruppe umfasst vorzugsweise eine Tragstruktur, welche mehrere, vorzugsweise im Wesentlichen parallel zueinander ausgerichtete, Querträger umfasst, wobei mindestens ein Querträger ein Querträger einer erfindungsgemäßen Querträgervorrichtung ist.

Die Bodengruppe umfasst vorzugsweise zwei oder mehr Querträger und/oder eine, zwei oder mehr Längsträger, an welchen die Querträger angeordnet sind.

Vorzugsweise umfasst die Bodengruppe zwei Längsträger, an welchen die Querträger angeordnet sind und zwischen welchen die Querträger sich erstrecken.

Bei einer Ausgestaltung der Erfindung ist vorgesehen, dass die Bodengruppe eine Querträgervorrichtung umfasst und zusätzlich einen Querträger, an dem eine Tragrolle der Fördervorrichtung angeordnet ist, wobei die Tragrolle mittels des Antriebselements der Querträgervorrichtung antreibbar ist.

Die Tragrolle des zusätzlichen Querträgers ist vorzugsweise mittels eines Kopplungselements einer Kopplungsvorrichtung, insbesondere mittels eines Zahnriemens oder einer Kette, mit dem Antriebselement der Querträgervorrichtung verbunden.

Ferner kann vorgesehen sein, dass die Bodengruppe eine Querträgervorrichtung umfasst und zusätzlich eine von dem Querträger der Querträgervorrichtung beabstandete Tragrolle, welche mittels des Antriebselements der Querträgervorrichtung antreibbar ist. Die Tragrolle ist hierzu insbesondere mittels eines Kopplungselements, beispielsweise eines Zahnriemens oder einer Kette, einer Kopplungsvorrichtung mit dem Antriebselement der Querträgervorrichtung verbunden.

Die erfindungsgemäße Bodengruppe eignet sich insbesondere zur Verwendung in einer Beschichtungs- und/oder Bearbeitungsanlage zum Beschichten und/oder Bearbeiten, insbesondere zum Lackieren und/oder mechanischen Bearbeiten, von Werkstücken.

Die vorliegende Erfindung betrifft ferner eine Beschichtungs- und/oder Bearbeitungsanlage zum Beschichten und/oder Bearbeiten, insbesondere zum Lackieren und/oder mechanischen Bearbeiten, von Werkstücken.

Der Erfindung liegt diesbezüglich die Aufgabe zugrunde, eine Beschichtungs- und/oder Bearbeitungsanlage zum Beschichten und/oder Bearbeiten von Werkstücken bereitzustellen, bei welcher Bauteile einer Antriebsvorrichtung für eine Fördervorrichtung vor unerwünschten Verunreinigungen geschützt werden können.

Diese Aufgabe wird erfindungsgemäß dadurch gelöst, dass eine Beschichtungs- und/oder Bearbeitungsanlage zum Beschichten und/oder Bearbeiten, insbesondere zum Lackieren und/oder mechanischen Bearbeiten, von Werkstücken Folgendes umfasst:
- eine Fördervorrichtung zum Fördern der Werkstücke durch einen Beschichtungs- und/oder Bearbeitungsbereich der Beschichtungs- und/oder Bearbeitungsanlage mittels Werkstückträgern längs einer Förderrichtung der Fördervorrichtung, wobei die Fördervorrichtung eine Tragrolle umfasst, auf welcher ein Werkstückträger zum Fördern desselben anordenbar ist;
- eine Antriebsvorrichtung zum Antreiben der Tragrolle der Fördervorrichtung, wobei die Antriebsvorrichtung ein kraftübertragendes Antriebselement umfasst,
wobei das kraftübertragende Antriebselement zumindest abschnittsweise in einem Innenraum eines Querträgers einer Bodengruppe der Beschichtungs- und/oder Bearbeitungsanlage angeordnet ist.

Dadurch, dass bei der erfindungsgemäßen Beschichtungs- und/oder Bearbeitungsanlage das kraftübertragende Antriebselement zumindest abschnittsweise in einem Innenraum eines Querträgers angeordnet ist, ist es vor unerwünschten Verunreinigungen geschützt.

Eine Beschichtungs- und/oder Bearbeitungsanlage ist insbesondere eine Lackieranlage zum Lackieren von Werkstücken, Fahrzeugkarosserien oder Teilen von Fahrzeugkarosserien.

Insbesondere kann vorgesehen sein, dass eine Beschichtungs- und/oder Bearbeitungsanlage eine Spritzlackieranlage ist.

Die erfindungsgemäße Beschichtungs- und/oder Bearbeitungsanlage weist vorzugsweise mindestens eine erfindungsgemäße Bodengruppe und/oder mindestens eine erfindungsgemäße Querträgervorrichtung auf.

Die erfindungsgemäße Querträgervorrichtung weist vorzugsweise einzelne oder mehrere Merkmale und/oder Vorteile der erfindungsgemäßen Bodengruppe und/oder der erfindungsgemäßen Beschichtungs- und/oder Bearbeitungsanlage auf.

Die erfindungsgemäße Bodengruppe weist vorzugsweise einzelne oder mehrere Merkmale und/oder Vorteile der erfindungsgemäßen Querträgervorrichtung und/oder der erfindungsgemäßen Beschichtungs- und/oder Bearbeitungsanlage auf.

Die erfindungsgemäße Beschichtungs- und/oder Bearbeitungsanlage weist vorzugsweise einzelne oder mehrere Merkmale und/oder Vorteile der erfindungsgemäßen Querträgervorrichtung und/oder der erfindungsgemäßen Bodengruppe auf.

Die Fördervorrichtung kann insbesondere eine Rollenfördervorrichtung oder Rollenbahn sein.

Ein Werkstückträger kann beispielsweise ein Skidrahmen sein. Ferner kann vorgesehen sein, dass die Werkstücke mittels Skidkufen, die durch das Werkstück und/oder eines oder mehrere Verbindungselemente miteinander verbunden sind, aufnehmbar und in der Förderrichtung förderbar sind.

Eine Querträgervorrichtung ist vorzugsweise eine vorgefertigte oder vormontierte Komponente, welche vorzugsweise eine in sich fertig gestellte Funktionseinheit bildet.

Vorteilhaft kann es sein, wenn die Fördervorrichtung zur Förderung von Werkstücken durch den Beschichtungs- und/oder Bearbeitungsbereich mehrere in der Förderrichtung aufeinander folgende Paare von Tragrollenaufnahmen zur Aufnahme von jeweils einem Paar von Tragrollen umfasst, auf welche die Werkstückträger, an denen die Werkstücke anordenbar sind, im montierten Zustand der Beschichtungs- und/oder Bearbeitungsanlage auflegbar sind.

Vorzugsweise sind einzelne Tragrollen oder Paare von Tragrollen mittels der Antriebsvorrichtung antreibbar, um die Werkstückträger zusammen mit den daran angeordneten Werkstücken in der Förderrichtung zu fördern.

Die erfindungsgemäße Querträgervorrichtung, die erfindungsgemäße Bodengruppe und/oder die erfindungsgemäße Beschichtungs- und/oder Bearbeitungsanlage können vorzugsweise ferner einzelne oder mehrere der nachfolgend aufgeführten Merkmale und/oder Vorteile aufweisen:
Die Fördervorrichtung, insbesondere eine Rollenbahn, kann vorzugsweise als vormontierte und/oder vorgefertigte Einheit, insbesondere als vormontiertes und/oder vorgefertigtes Modul, konstruiert und montiert werden.

Die Anzahl von notwendigen Wellendurchbrüchen wird vorzugsweise reduziert.

Vorteilhaft kann es sein, wenn eine Integration eines Gitterrosts möglich ist.

Die Fördervorrichtung kann eine Verbindungs-, Puffer- und/oder Speicherförderstrecke aufweisen.

Ein Beschichtungs- und/oder Bearbeitungsraum ist insbesondere ein Innenraum einer Spritzkabine. Ferner kann vorgesehen sein, dass ein Beschichtungs- und/oder Bearbeitungsraum ein Raum ist, in welchem ein Arbeitsplatz, insbesondere zum mechanischen Bearbeiten von Werkstücken, vorgesehen ist.

Vorzugsweise werden der Aufwand bei einer Abstimmung von Schnittstellen zwischen benachbarten Fördervorrichtungen einer Gesamtanlage und damit auch die Gefahr von Fehlern und damit verbundene Kosten reduziert.

Die Menge von mit Overspray benetzbaren Oberflächen wird vorzugsweise reduziert.

Außenliegende Antriebe und Wellen, insbesondere Kardanwellen, werden vorzugsweise integriert.

Eine Rollenbahn-Fördervorrichtung ist vorzugsweise in einen Stahlbau unterhalb des Beschichtungs- und/oder Bearbeitungsraums integriert.

In dem Beschichtungs- und/oder Bearbeitungsraum können beispielsweise Nasslacke (lösemittelhaltige und wasserlösliche Lacke), lösemittelfreie Beschichtungsstoffe (PVC-Plastisole, Wachse), Pulverlacke, Sinterpulver und/oder Metallpulver appliziert werden. Ferner kann in dem Beschichtungs- und/oder Bearbeitungsraum bei Reparaturen entstehender Schleifstaub anfallen.

Eine Lacknebel- und Overspray-Abscheidung kann beispielsweise erfolgen mit: Nassauswaschung (Wäscher), Trockenabscheidung (Filter), mit Precoat-Material (Filterhilfsmaterial) vorbeschichtete Filter und/oder Wassertassen (Staubbindung).

Die Bodengruppe, insbesondere ein Stahlbau der Bodengruppe, wird vorzugsweise auf Trägern, insbesondere schwingungsfrei nach unten abgestützt und/oder an einer Deckenkante einer Arbeitsebene befestigt.

Beispielsweise kann vorgesehen sein, dass die Bodengruppe, insbesondere ein Stahlbau der Bodengruppe, zwei Längsträger umfasst, welche vorzugsweise links und rechts unterhalb des Beschichtungs- und/oder Bearbeitungsraums (Spritzkabine) verlaufen. Die Längsträger dienen vorzugsweise zur Aufnahme der Applikationstechnik, beispielsweise der Aufnahme von Robotern, und/oder zur Aufnahme von Stützen des Beschichtungs- und/oder Bearbeitungsraums, insbesondere der Spritzkabine, zur Aufnahme von Wänden (seitlichen Wänden) des Beschichtungs- und/oder Bearbeitungsraums und/oder zur Aufnahme eines Plenums.

Die Bodengruppe, insbesondere ein Stahlbau der Bodengruppe, umfasst vorzugsweise ferner Querträger zur Aufnahme der Fördertechnik, insbesondere der Fördervorrichtung.

Die Querträger sind vorzugsweise in einem regelmäßigen Raster angeordnet.

Die Querträgervorrichtung und/oder die Bodengruppe ist vorzugsweise ein vorgefertigtes und/oder vormontiertes Modul, dessen Einzelteile als möglichst große zusammenhängende Stücke zu einem Montageort der Beschichtungs- und/oder Bearbeitungsanlage transportiert werden können.

Je nach Anforderung können unterschiedliche Varianten von Rollenbahnen zum Einsatz kommen.

Beispielsweise kann vorgesehen sein, dass die Fördervorrichtung einseitig angetriebene Tragrollen (Rollen) umfasst.

Günstig kann es sein, wenn die Fördervorrichtung zwei parallel zueinander verlaufende Rollenbahnen umfasst, wobei jeweils nur eine, beispielsweise eine bezüglich der Fördervorrichtung linke oder rechte, oder beide Rollenbahnen angetrieben sind.

Ferner kann vorgesehen sein, dass die Fördervorrichtung leerlaufende Tragrollen umfasst.

Ferner können sämtliche denkbaren Kombinationen aus angetriebenen und leerlaufenden Rollen vorgesehen sein.

Die Fördervorrichtung, insbesondere die Rollenbahn, ist vorzugsweise an den Aufbau der Bodengruppe, insbesondere den Stahlbau der Bodengruppe, angepasst. Separate Querträger für die Fördervorrichtung sind vorzugsweise entbehrlich.

Die Dimension und Bauhöhe eines oder mehrerer Querträger wird vorzugsweise unter Berücksichtigung der Rollenbahn- und/oder Skidhöhe angepasst und richtet sich insbesondere nach den Erfordernissen der Applikationstechnik und der fördertechnischen Anbindung sowie der erforderlichen Höhe einer nachfolgenden Trocknervorrichtung.

Vorzugsweise ist die Querträgervorrichtung und/oder die Bodengruppe ein integriertes Kabinenmodul (IKM) oder ein integriertes Traversemodul (ITM).

Die Fördervorrichtung weist vorzugsweise eine in Förderrichtung durchgängige Tragrollen- und/oder Kufenabdeckung, insbesondere Skidkufenabdeckung, auf.

Die Abdeckung ist vorzugsweise in vertikaler Richtung von oben aufgesteckt und kann somit zu Reinigungszwecken leicht entnommen werden. Die Abdeckung kann beispielsweise zweiteilig ausgebildet sein, wobei eine obere Abdeckung sich oberhalb einer Skidkufe erstreckt und eine untere Abdeckung sich unterhalb einer Skidkufe erstreckt, beispielsweise um eine Verunreinigung der Tragrollen zu verhindern.

Die untere Abdeckung weist vorzugsweise eine, insbesondere an ihrem horizontalen Endpunkt angeordnete, Sicke oder Vertiefung auf, die verhindert, dass Verunreinigungen, insbesondere flüssige Verunreinigungen, in einen Innenraum der Abdeckung gelangen, insbesondere unter die Abdeckung laufen.

Günstig kann es sein, wenn mittels eines Antriebselements, insbesondere einer Kardanwelle, nur eine Tragrolle über ein Kopplungselement, insbesondere einen Zahnriemen oder eine Kette, angetrieben wird und die gegenüberliegende Tragrolle des Paars von Tragrollen mit der angetriebenen Rolle starr über eine Welle verbunden ist.

Ferner kann vorgesehen sein, dass von dem Antriebselement, insbesondere von der Kardanwelle, ein von zwei Lagern gestütztes Wellenstück innerhalb des Querträgers angetrieben wird. Auf dem Wellenstück sitzt vorzugsweise eine innerhalb des Querträgers angeordnete Rolle, die so platziert ist, dass ein oberes Teilsegment aus dem Querträger herausragt.

Günstig kann es sein, wenn mittels des Antriebselements, insbesondere der Kardanwelle, zwei von zwei Lagern gestützte Wellenstücke innerhalb des Querträgers angetrieben werden. Auf den Wellenstücken sitzt insbesondere jeweils eine angetriebene Rolle, die innerhalb des Querträgers so platziert ist, dass ein oberes Teilsegment jeweils aus dem Querträger herausragt. Vorzugsweise sind beide Tragrollen angetrieben.

Für den Fall, dass eine besonders hohe Position der Fördervorrichtung, insbesondere der Rollenbahn, notwendig ist, kann ein Distanzelement (Distanzstück) unter einer Tragrollenaufnahme, insbesondere unter einem Rollengehäuse, angeordnet werden, insbesondere zusammen mit der Tragrollenaufnahme auf den Querträger aufgeschraubt werden. Die Tragrolle in der Tragrollenaufnahme wird vorzugsweise mit einem entsprechend längeren Kopplungselement, insbesondere einem Zahnriemen oder einer Kette, angetrieben, oder ist antriebslos (leerlaufend).

Ferner kann vorgesehen sein, dass der Querträger nach oben gekröpft wird. Die Tragrollen werden dann vorzugsweise auch an dem gekröpften Abschnitt angeordnet und insbesondere nur eine Tragrolle von einer Seite über ein Antriebselement, insbesondere eine Kardanwelle, und ein Kopplungselement angetrieben. Das Kopplungselement erstreckt sich dabei vorzugsweise innerhalb eines quer, insbesondere im Wesentlichen senkrecht, zur Längsrichtung des Querträgers erstreckenden Querträgerabschnitts.

Günstig kann es sein, wenn die Tragrollen innerhalb eines gekröpften horizontalen Querträgerabschnitts angeordnet und in denselben integriert sind. Von den von Lagern gestützten Tragrollen werden dann entweder nur eine oder beide angetrieben, beispielsweise mittels einer Wellenverbindung und/oder über ein Kopplungselement, insbesondere einen Zahnriemen oder eine Kette, welches innerhalb des quer, insbesondere im Wesentlichen senkrecht, zur Längsrichtung des Querträgers verlaufenden Querträgerabschnitts angeordnet ist.

Alternativ oder ergänzend hierzu kann vorgesehen sein, dass ein Querträger nach unten gekröpft ist. Die Anordnung und der Antrieb der Tragrollen erfolgt vorzugsweise im Wesentlichen so wie vorstehend hinsichtlich eines nach oben gekröpften Querträgers beschrieben wurde.

Es kann vorgesehen sein, dass die Querträgervorrichtung eine Stützkonstruktion aufweist, mittels welcher zwei starr mit einer Welle verbundene Tragrollen gehalten werden. Innerhalb der Stützkonstruktion verläuft vorzugsweise ein Kopplungselement zum Koppeln der Welle mit dem Antriebselement, insbesondere einer Kardanwelle.

Auch kann vorgesehen sein, dass Tragrollen nur von einem Lagerbock gehalten werden und kein Rollengehäuse aufweisen. Dabei liegen fast alle Teile offen, wobei vorzugsweise die Kopplungsvorrichtung, insbesondere ein Kopplungselement der Kopplungsvorrichtung, abgedeckt ist.

Vorzugsweise ist ein Antriebsstrang in eine Kabinen-Stahlbau-Struktur integriert.

Vorzugsweise ist eine durchgängige Fördervorrichtung, insbesondere eine durchgängige Rollenbahn-Fördervorrichtung, vorgesehen, welche sich ausgehend von einer Beschichtungs- und/oder Bearbeitungsanlage, insbesondere einer Spritzkabine, über einen Trockner, Arbeitsplätze und/oder eine verbindende Fördertechnik erstreckt. Dies kann insbesondere durch die Verwendung von Gleichteile-Module realisiert werden.

Durch die Verwendung einer Rollenbahn-Fördervorrichtung kann eine im Vergleich zu einem Tragketten-Förderer flexiblere Einbindung der Werkstücke in den Gesamtfertigungsablauf einer Beschichtungs- und/oder Bearbeitungsanlage, insbesondere einer Lackiererei, erfolgen.

Vorzugsweise können unterschiedliche Taktzeiten innerhalb des Beschichtungs- und/oder Bearbeitungsraums realisiert werden.

Günstig kann es sein, wenn mittels einer Steuervorrichtung mindestens eine Funktion der Beschichtungs- und/oder Bearbeitungsanlage durchführbar, insbesondere steuerbar und/oder regelbar, ist.

Vorteilhaft kann es sein, wenn die Querträgervorrichtung, die Bodengruppe und/oder die Beschichtungs- und/oder Bearbeitungsanlage, insbesondere eine Fördervorrichtung der Beschichtungs- und/oder Bearbeitungsanlage, eine Positioniervorrichtung zum Positionieren eines Werkstückträgers samt eines oder mehrerer daran angeordneter Werkstücke umfasst.

Die Positioniervorrichtung umfasst vorzugsweise eine Schiebevorrichtung und/oder eine Blockiervorrichtung.

Die Schiebevorrichtung umfasst beispielsweise eine Druckzylindervorrichtung, insbesondere eine hydraulische und/oder pneumatische Druckzylindervorrichtung.

Günstig kann es sein, wenn die Schiebevorrichtung ein Hebelelement umfasst, welches in einen Förderweg des Werkstückträgers hineinragen kann, um mit dem Werkstückträger in Eingriff gebracht zu werden.

Vorzugsweise kann der Werkstückträger samt des einen oder der mehreren daran angeordneten Werkstücke mittels der Schiebevorrichtung bewegt werden, insbesondere in einer der Förderrichtung entgegengesetzten Richtung.

Es kann vorgesehen sein, dass eine Kolbenstange der Druckzylindervorrichtung der Schiebevorrichtung aus einem Druckzylinder der Druckzylindervorrichtung herausschiebbar oder herausdrückbar ist, um das Hebelelement der Schiebevorrichtung mit dem Werkstückträger in Eingriff zu bringen, insbesondere um den Werkstückträger entgegen der Förderrichtung zu bewegen.

Bei einer Ausgestaltung der Erfindung kann vorgesehen sein, dass die Blockiervorrichtung ein Blockierelement umfasst.

Das Blockierelement ragt vorzugsweise wahlweise in einen Förderweg des Werkstückträgers hinein.

Vorzugsweise ist das Blockierelement federnd gelagert, so dass es in einer Bewegungsrichtung nachgiebig ist.

Vorteilhaft kann es sein, wenn die Blockiervorrichtung monodirektional blockierend ausgebildet ist.

Vorzugsweise ist die Blockiervorrichtung derart monodirektional blockierend ausgebildet, dass der Werkstückträger samt des einen oder der mehreren daran angeordneten Werkstücke in der Förderrichtung an der Blockiervorrichtung vorbeibewegbar ist, eine Bewegung des Werkstückträgers samt des einen oder der mehreren daran angeordneten Werkstücke in einer der Förderrichtung entgegengesetzten Richtung jedoch blockierbar ist.

Das Blockierelement kann beispielsweise als eine Sperrklinke ausgebildet sein, welche, insbesondere federbelastet, in den Förderweg des Werkstückträgers hineinklappbar ist.

Es kann vorgesehen sein, dass die Schiebevorrichtung und/oder die Blockiervorrichtung zumindest abschnittsweise oder vollständig innerhalb und/oder unter einer Abdeckungsvorrichtung zur Abdeckung von Auflageelementen des Werkstückträgers angeordnet ist.

Eine Abdeckungsvorrichtung ist insbesondere eine Kufenabdeckung zur Abdeckung von Kufen eines als Skid ausgebildeten Werkstückträgers.

Die Schiebevorrichtung und/oder die Blockiervorrichtung kann beispielsweise eine Beschleunigungsvorrichtung zum Beschleunigen des Werkstückträgers und/oder eine Bremsvorrichtung zum Abbremsen des Werkstückträgers sein.

Zur Positionierung des Werkstückträgers samt des einen oder der mehreren daran angeordneten Werkstücke mittels einer Positioniervorrichtung wird der Werkstückträger samt des einen oder der mehreren daran angeordneten Werkstücke vorzugsweise in der Förderrichtung an der Blockiervorrichtung vorbeibewegt.

Ferner wird der Werkstückträger samt des einen oder der mehreren daran angeordneten Werkstücke insbesondere mittels der Schiebevorrichtung in einer der Förderrichtung entgegengesetzten Richtung bewegt.

Günstig kann es sein, wenn der Werkstückträger samt des einen oder der mehreren daran angeordneten Werkstücke schließlich zwischen die Blockiervorrichtung und die Schiebevorrichtung eingeklemmt wird.

Eine präzise Positionierung eines Werkstückträgers ist insbesondere für einen Lackiervorgang wichtig, da die Lackierroboter feste Referenzpunkte haben. Die festen Referenzpunkte werden anhand einer Referenzkarosse für jeden Karossentyp festgelegt. Eine korrekte Positionierung ist insbesondere deshalb wichtig, weil jede Abweichung in der Positionierung im Betrieb der Anlage, das heißt während des Lackiervorgangs, zu Abweichungen beim Lackierergebnis und beim Lackverbrauch führen kann.

Die Positioniervorrichtung ist vorzugsweise teilweise oder vollständig in eine Abdeckungsvorrichtung, insbesondere in eine Kufenabdeckung, integriert. Eine Verschmutzung der Positioniervorrichtung, insbesondere durch Lack-Overspray, und der Reinigungsbedarf der Positioniervorrichtung können hierdurch vorzugsweise reduziert werden.

Die Positioniervorrichtung ist vorzugsweise variabel relativ zu der Fördervorrichtung, insbesondere relativ zu einer Rollenbahnvorrichtung der Fördervorrichtung, festlegbar. Vorzugsweise kann die Position, an welcher der Werkstückträger samt des einen oder der mehreren daran angeordneten Werkstücke mittels der Positioniervorrichtung arretierbar ist, auch nach Fertigstellung der Fördervorrichtung verändert werden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Bodengruppe einer Beschichtungs- und/oder Bearbeitungsanlage;
- Fig. 2: einen schematischen vertikalen Schnitt durch einen Abschnitt einer Querträgervorrichtung der Bodengruppe aus Fig. 1, in welchem eine Tragrolle einer Fördervorrichtung angeordnet ist;
- Fig. 3: eine der Fig. 2 entsprechende schematische Schnittdarstellung einer zweiten Ausführungsform einer Querträgervorrichtung;
- Fig. 4: eine schematische perspektivische Darstellung einer Filtervorrichtung einer Beschichtungs- und/oder Bearbeitungsanlage mit sieben unterschiedlichen Ausführungsformen von Querträgervorrichtungen;
- Fig. 5: eine schematische Darstellung einer dritten Ausführungsform einer Querträgervorrichtung, bei welcher zwei Tragrollen der Fördervorrichtung mittels einer gemeinsamen Welle mit einem Antriebselement einer Antriebsvorrichtung der Fördervorrichtung verbunden sind;
- Fig. 6: eine der Fig. 5 entsprechende schematische Darstellung einer vierten Ausführungsform einer Querträgervorrichtung, bei welcher zwei Tragrollen der Fördervorrichtung in einen im Wesentlichen linearen Querträger integriert sind, wobei beide Tragrollen mittels eines gemeinsamen Antriebselements angetrieben sind;
- Fig. 7: eine der Fig. 5 entsprechende schematische Darstellung einer fünften Ausführungsform einer Querträgervorrichtung, bei welcher zwei Tragrollen der Fördervorrichtung in einen im Wesentlichen linearen Querträger integriert sind, wobei lediglich eine Tragrolle mittels eines Antriebselements angetrieben ist;
- Fig. 8: eine der Fig. 5 entsprechende schematische Darstellung einer sechsten Ausführungsform einer Querträgervorrichtung, bei welcher ein in vertikaler Richtung nach oben versetzter Querträgerabschnitt vorgesehen ist, in welchen zwei angetriebene Tragrollen integriert sind;
- Fig. 9: eine der Fig. 5 entsprechende schematische Darstellung einer siebten Ausführungsform einer Querträgervorrichtung, welche im Wesentlichen der in Fig. 8 dargestellten sechsten Ausführungsform entspricht, wobei lediglich eine Tragrolle angetrieben ist;
- Fig. 10: eine der Fig. 5 entsprechende schematische Darstellung einer achten Ausführungsform einer Querträgervorrichtung, bei welcher ein in vertikaler Richtung nach oben versetzter Querträgerabschnitt vorgesehen ist, wobei zwei angetriebene, seitlich über den Querträgerabschnitt hervorstehende Tragrollen vorgesehen sind;
- Fig. 11: eine der Fig. 5 entsprechende schematische Darstellung einer neunten Ausführungsform einer Querträgervorrichtung, welche im Wesentlichen der in Fig. 10 dargestellten achten Ausführungsform entspricht, wobei lediglich eine Tragrolle angetrieben ist;
- Fig. 12: eine der Fig. 5 entsprechende schematische Darstellung einer zehnten Ausführungsform einer Querträgervorrichtung, bei welcher eine Stützvorrichtung zur Aufnahme zweier auf einer gemeinsamen Welle angeordneter Tragrollen vorgesehen ist;
- Fig. 13: eine der Fig. 5 entsprechende schematische Darstellung einer elften Ausführungsform einer Querträgervorrichtung, bei welcher zwei Stützvorrichtung für jeweils eine Tragrolle vorgesehen sind;
- Fig. 14: eine der Fig. 1 entsprechende schematische perspektivische Darstellung einer alternativen Ausführungsform einer Bodengruppe, bei welcher zwei Reihen von leerlaufenden Tragrollen vorgesehen sind;
- Fig. 15: eine schematische Schnittdarstellung eines Paars von Tragrollen gemäß der in Fig. 14 dargestellten Ausführungsform der Bodengruppe;
- Fig. 16: eine schematische perspektivische Darstellung einer Blockiervorrichtung einer Positioniervorrichtung;
- Fig. 17: eine schematische perspektivische Darstellung einer Schiebevorrichtung der Positioniervorrichtung;
- Fig. 18: eine weitere schematische perspektivische Darstellung der Schiebevorrichtung der Positioniervorrichtung;
- Fig. 19: eine vergrößerte Darstellung des Bereichs XIX in Fig. 18;
- Fig. 20: eine vergrößerte Darstellung der Blockiervorrichtung der Positioniervorrichtung aus Fig. 16; und
- Fig. 21: einen schematischen vertikalen Querschnitt durch die Schiebevorrichtung der Positioniervorrichtung im montierten Zustand derselben an einer Rollenbahnvorrichtung.

Gleiche oder funktional äquivalente Elemente sind in sämtlichen Figuren mit denselben Bezugszeichen versehen.

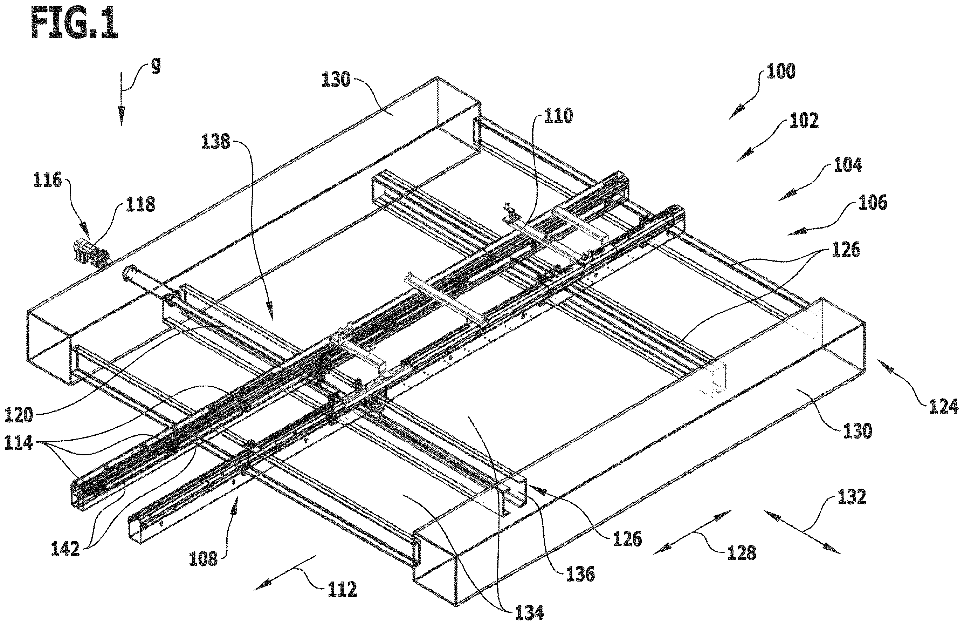

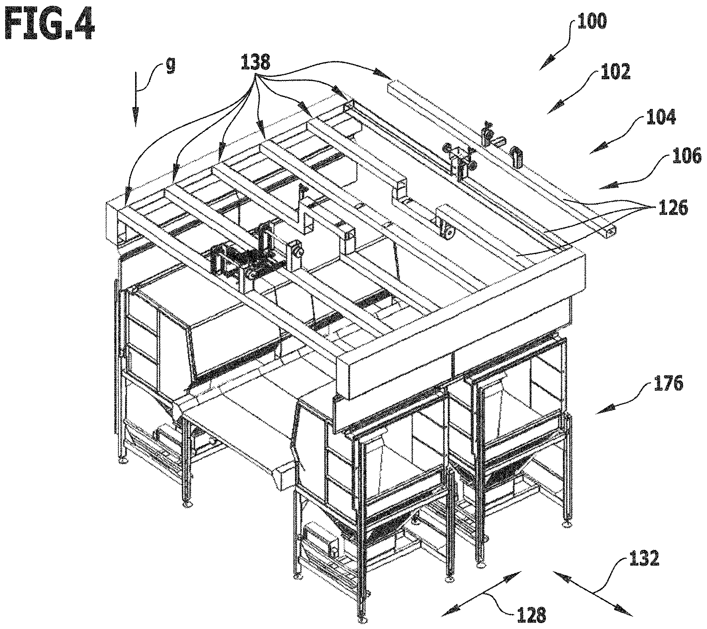

Eine beispielsweise in Fig. 1 und 4 teilweise dargestellte, als Ganzes mit 100 bezeichnete Beschichtungs- und/oder Bearbeitungsanlage ist beispielsweise als eine Lackieranlage 102 ausgebildet.

Die Beschichtungs- und/oder Bearbeitungsanlage 100 umfasst einen Beschichtungs- und/oder Bearbeitungsraum 104, in welchem (nicht dargestellte) Werkstücke beschichtet und/oder bearbeitet werden können.

Insbesondere können die Werkstücke dabei in einem Beschichtungs- und/oder Bearbeitungsbereich 106 des Beschichtungs- und/oder Bearbeitungsraums 104 beschichtet bzw. bearbeitet werden.

Zum Fördern der Werkstücke durch den Beschichtungs- und/oder Bearbeitungsraum 104 hindurch umfasst die Beschichtungs- und/oder Bearbeitungsanlage 100 eine Fördervorrichtung 108, welche beispielsweise als eine Rollenbahn-Fördervorrichtung 108 ausgebildet ist.

Die Werkstücke können auf Werkstückträgern 110 angeordnet und mittels der Fördervorrichtung 108 in einer Förderrichtung 112 durch den Beschichtungs- und/oder Bearbeitungsraum 104 gefördert werden.

Die Fördervorrichtung 108 umfasst mehrere in der Förderrichtung 112 hintereinander angeordnete Paare von Tragrollen 114, auf welche die Werkstückträger 110 auflegbar sind.

Zum Antreiben der Werkstückträger 110 können zumindest einzelne Tragrollen 114 mittels einer Antriebsvorrichtung 116 angetrieben werden.

Die Antriebsvorrichtung 116 umfasst hierzu einen Motor 118, ein kraftübertragendes Antriebselement 120 und eine Kopplungsvorrichtung 122 zum Koppeln des Antriebselements 120 mit mindestens einer Tragrolle 114.

Die Fördervorrichtung 108 kann grundsätzlich auf eine bestehende Bodengruppe 124 der Beschichtungs- und/oder Bearbeitungsanlage 100 aufgebaut werden.

Vorzugsweise ist die Antriebsvorrichtung 116 zumindest teilweise und zumindest abschnittsweise in die Bodengruppe 124 der Beschichtungs- und/oder Bearbeitungsanlage 100 integriert.

Insbesondere kann vorgesehen sein, dass die Bodengruppe 124 Querträger 126 umfasst, welche quer, insbesondere im Wesentlichen senkrecht, zu einer Längsrichtung 128 der Beschichtungs- und/oder Bearbeitungsanlage 100 ausgerichtet sind.

Die Längsrichtung 128 der Beschichtungs- und/oder Bearbeitungsanlage 100 verläuft insbesondere im Wesentlichen parallel zur Förderrichtung 112 der Fördervorrichtung 108.

Die Querträger 126 der Bodengruppe 124 sind zwischen zwei Längsträgern 130 der Bodengruppe 124 angeordnet, welche sich parallel zur Längsrichtung 128 der Beschichtungs- und/oder Bearbeitungsanlage 100 erstrecken.

Die Querträger 126 der Bodengruppe 124 sind im Wesentlichen parallel zu einer horizontalen Querrichtung 132 der Beschichtungs- und/oder Bearbeitungsanlage 100 ausgerichtet.

Die Längsrichtung 128 und die Querrichtung 132 der Beschichtungs- und/oder Bearbeitungsanlage 100 sind im Wesentlichen senkrecht zueinander ausgerichtet.

Zwischen den beiden Längsträgern 130 und einander benachbarten Querträgern 126 sind Öffnungen 134 in der Bodengruppe 124 gebildet, durch welche Luft aus dem Beschichtungs- und/oder Bearbeitungsraum 104 in vertikaler Richtung g nach unten entweichen kann, insbesondere abgesaugt werden kann.

Insbesondere dann, wenn die durch die Bodengruppe 124 geführte Luft Verunreinigungen enthält, kann das Hindurchführen der Luft durch die Bodengruppe 124 zu einer unerwünschten Verunreinigung der Bodengruppe 124, der Fördervorrichtung 108 und/oder Antriebsvorrichtung 116 führen.

Um insbesondere die Antriebsvorrichtung 116 vor einer unerwünschten Verschmutzung und einer hieraus möglicherweise resultierenden Beeinträchtigung der Funktionsweise zu schützen, ist das kraftübertragende Antriebselement 120 der Antriebsvorrichtung 116 zumindest abschnittsweise in einem Innenraum 136 eines Querträgers 126 angeordnet.

Das kraftübertragende Antriebselement 120 ist dabei insbesondere vor einer Montage der gesamten Beschichtungs- und/oder Bearbeitungsanlage 100 zusammen mit dem Querträger 126 vormontiert und/oder vorgefertigt.

Die Bodengruppe 124 umfasst somit vorzugsweise eine Querträgervorrichtung 138, welche einen Querträger 126 und ein kraftübertragendes Antriebselement 120 umfasst, wobei das kraftübertragende Antriebselement 120 zumindest abschnittsweise in dem Innenraum 136 des Querträgers 126 angeordnet ist.

Bei der in Fig. 1 dargestellten ersten Ausführungsform der Querträgervorrichtung 138 sind zwei Tragrollen 114 direkt über dem Querträger 126 angeordnet, in welchem das kraftübertragende Antriebselement 120 angeordnet ist.

Die bezüglich der Förderrichtung 112 vor und hinter diesen Tragrollen 114 angeordneten weiteren Tragrollen 114 sind mittels weiteren Kopplungsvorrichtungen 122 miteinander verbunden.

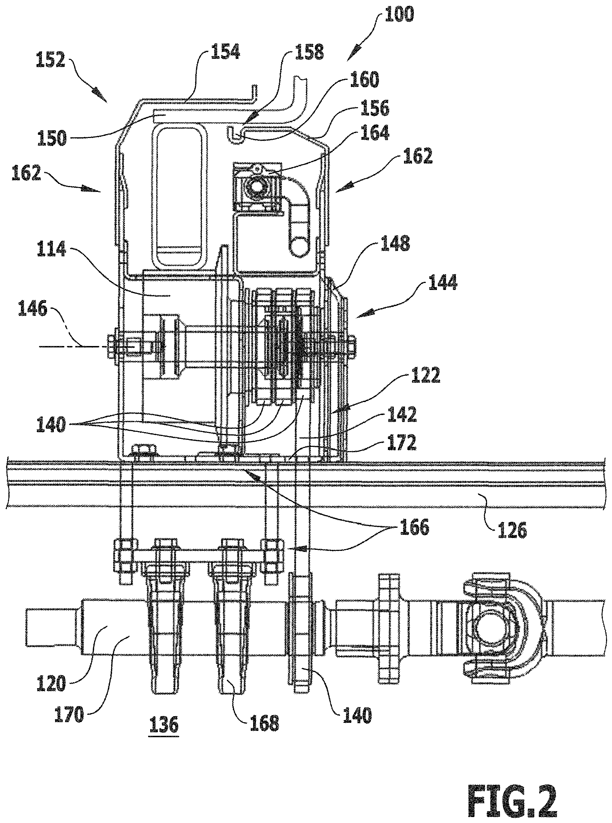

Wie insbesondere Fig. 2 zu entnehmen ist, umfasst die Kopplungsvorrichtung 122 im Bereich der Querträgervorrichtung 138 hierzu drei Kopplungselementaufnahmen 140 zur Aufnahme von drei Kopplungselementen 142.

Eines der Kopplungselemente 142 dient der Verbindung des kraftübertragenden Antriebselements 120 mit der direkt über dem Querträger 126 der Querträgervorrichtung 138 angeordneten Tragrolle 114.

Die beiden weiteren Kopplungselementaufnahmen 140 und Kopplungselemente 142 dienen der Kopplung der über dem Querträger 126 der Querträgervorrichtung 138 angeordneten Tragrolle 114 mit den bezüglich der Förderrichtung 112 vor und hinter dieser Tragrolle 114 angeordneten weiteren Tragrollen 114.

Mittels der Antriebsvorrichtung 116 können somit eine Vielzahl von Tragrollen 114 angetrieben werden, um den Werkstückträger 110 und ein darauf angeordnetes Werkstück in der Förderrichtung 112 zu fördern.

Wie insbesondere Fig. 2 zu entnehmen ist, ist die Tragrolle 114 in einer Tragrollenaufnahme 144 aufgenommen, insbesondere drehbar in der Tragrollenaufnahme 144 gelagert.

Eine Rotationsachse 146 der Tragrolle 114 ist dabei im Wesentlichen horizontal und im Wesentlichen senkrecht zur Förderrichtung 112 ausgerichtet.

Die Tragrollenaufnahme 144 umfasst vorzugsweise ein Tragrollengehäuse 148 zum Schutz der Tragrolle 114.

Auf die Tragrolle 114 kann der Werkstückträger 110 mit einer Kufe 150 des Werkstückträgers 110 aufgelegt werden.

Um die Tragrolle 114 sowie die Kufe 150 des Werkstückträgers 110 vor Verschmutzung zu schützen, ist vorzugsweise eine Kufenabdeckung 152 vorgesehen.

Die Kufenabdeckung 152 ist vorzugsweise zweiteilig ausgebildet und umfasst eine obere Abdeckung 154 und eine untere Abdeckung 156.

Die obere Abdeckung 154 erstreckt sich ausgehend von dem Tragrollengehäuse 148 in vertikaler Richtung g nach oben und umgreift die Kufe 150 oberhalb der Kufe 150.

Die untere Abdeckung 156 erstreckt sich ausgehend von dem Tragrollengehäuse 148 zunächst in vertikaler Richtung g nach oben und anschließend in horizontaler Richtung seitlich bis unterhalb der Kufe 150.

Ein dem Tragrollengehäuse 148 abgewandtes Ende 158 der unteren Abdeckung 156 ist vorzugsweise mit einer Sicke 160 versehen, um ein unerwünschtes Eindringen von Schmutz, insbesondere von Flüssigkeit, in den Bereich unter der Kufenabdeckung 152 zu vermeiden.

Die obere Abdeckung 154 und/oder die untere Abdeckung 156 weisen vorzugsweise jeweils eine Steckverbindung 162 auf, mittels welcher die obere Abdeckung 154 bzw. die untere Abdeckung 156 auf das Tragrollengehäuse 148 aufgesteckt werden können.

Die obere Abdeckung 154 und die untere Abdeckung 156 können hierdurch zur Reinigung leicht abgenommen und anschließend einfach wieder an dem Tragrollengehäuse 148 angeordnet werden.

Zur Detektion, ob im Bereich der Tragrolle 114 ein Werkstückträger 110 angeordnet ist, ist eine Sensorvorrichtung 164 vorgesehen.

Die Sensorvorrichtung 164 ist beispielsweise ein induktiver Näherungssensor.

Die Tragrollenaufnahme 144 ist mittels einer Schraubverbindung 166 an dem Querträger 126 festgelegt.

Das Antriebselement 120 der Antriebsvorrichtung 116 ist mittels einer Lagervorrichtung 168 in dem Innenraum 136 des Querträgers 126 drehbar gelagert.

Das Antriebselement 120 ist insbesondere als eine Welle 170, beispielsweise als eine Kardanwelle, ausgebildet.

Die Lagervorrichtung 168 ist mittels einer Schraubverbindung 166 an dem Querträger 126, insbesondere in dem Innenraum 136 des Querträgers 126, festgelegt.

Auch das Antriebselement 120 ist mit einer Kopplungselementaufnahme 140 versehen. Hierdurch kann mittels des Kopplungselements 142 ein Drehmoment von dem Antriebselement 120 auf die Tragrolle 114 übertragen werden.

Das Kopplungselement 142 ist hierzu durch eine Öffnung 172 in dem Querträger 126 und dem Tragrollengehäuse 148 geführt.

Vorzugsweise sind sämtliche Kopplungselemente 142 innerhalb der Tragrollenaufnahme 144, des Tragrollengehäuses 148 und/oder des Querträgers 126 angeordnet, um eine unerwünschte Verunreinigung der Kopplungselemente 142 zu verhindern.

Die in den Fig. 1 und 2 dargestellte Ausführungsform der Beschichtungs- und/oder Bearbeitungsanlage 100 funktioniert wie folgt:
An dem Werkstückträger 110 wird ein Werkstück angeordnet, welches beispielsweise zu lackieren ist.

Mittels der Fördervorrichtung 108 kann das Werkstück zusammen mit dem Werkstückträger 110 dem Beschichtungs- und/oder Bearbeitungsraum 104 zugeführt werden.

Der Werkstückträger 110 wird hierzu mit seinen Kufen 150 auf die Tragrollen 114 der Fördervorrichtung 108 aufgelegt.

Durch Antreiben der Tragrollen 114 kann der Werkstückträger 110 zusammen mit dem darauf angeordneten Werkstück in der Förderrichtung 112 gefördert werden.

Zum Antreiben der Rollen 114 wird das kraftübertragende Antriebselement 120 der Antriebsvorrichtung 116 mittels des Motors 118 der Antriebsvorrichtung 116 in eine Drehbewegung versetzt.

Diese Drehbewegung wird mittels der Kopplungsvorrichtung 122 von dem kraftübertragenden Antriebselement 120 auf die Tragrolle 114 übertragen.

Da mehrere Tragrollen 114 mittels Kopplungselementen 142 miteinander gekoppelt sind, wird nicht nur eine Tragrolle 114 mittels des kraftübertragenden Antriebselement 120 angetrieben. Vielmehr werden zugleich mehrere in der Förderrichtung 112 aufeinander folgende Tragrollen 114 angetrieben, um den Werkstückträger 110 in der Förderrichtung 112 bewegen zu können.

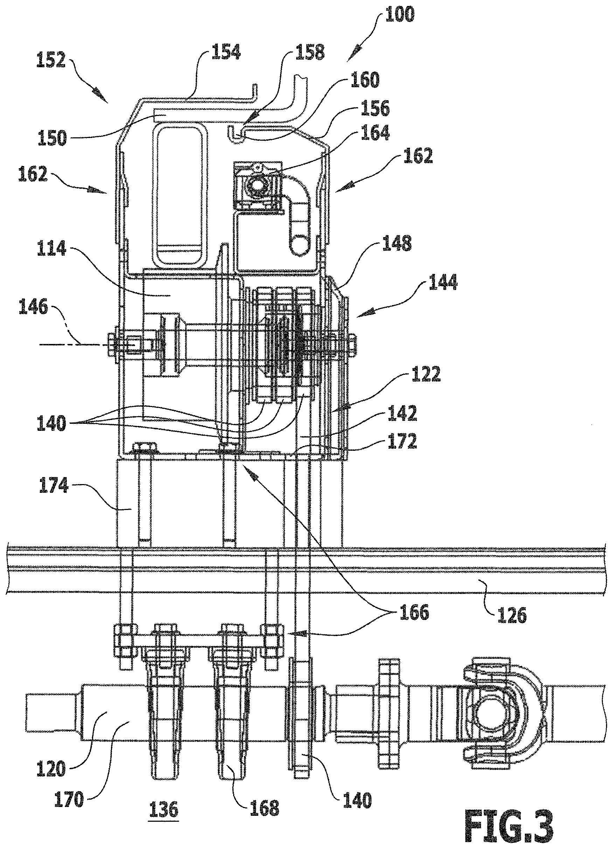

Wie insbesondere Fig. 3 zu entnehmen ist, kann zwischen der Tragrollenaufnahme 144 und dem Querträger 126 ein Distanzelement 174 angeordnet sein, um eine Distanz zwischen der Bodengruppe 124 und dem auf der Tragrolle 114 angeordneten Werkstückträger 110 zu vergrößern. Ein an dem Werkstückträger 110 angeordnetes Werkstück kann hierdurch in größerem Abstand vom Boden angeordnet und gefördert werden.

Hierdurch kann eine zweite Ausführungsform einer Querträgervorrichtung 138 gebildet werden.

Die in Fig. 3 dargestellte zweite Ausführungsform der Querträgervorrichtung 138 entspricht im Übrigen hinsichtlich Aufbau und Funktion der in den Fig. 1 und 2 dargestellten ersten Ausführungsform einer Querträgervorrichtung 138, so dass insoweit auf deren vorstehende Beschreibung Bezug genommen wird.

In Fig. 4 ist eine Filtervorrichtung 176 der Beschichtungs- und/oder Bearbeitungsanlage 100 dargestellt.

Die Filtervorrichtung 176 ist in vertikaler Richtung g unter der Bodengruppe 124 angeordnet und dient der Absaugung und Reinigung von in dem Beschichtungs- und/oder Bearbeitungsraum 104 angeordneter und verunreinigter Luft.

Fig. 4 zeigt ferner verschiedene Ausführungsformen von Querträgervorrichtungen 138.

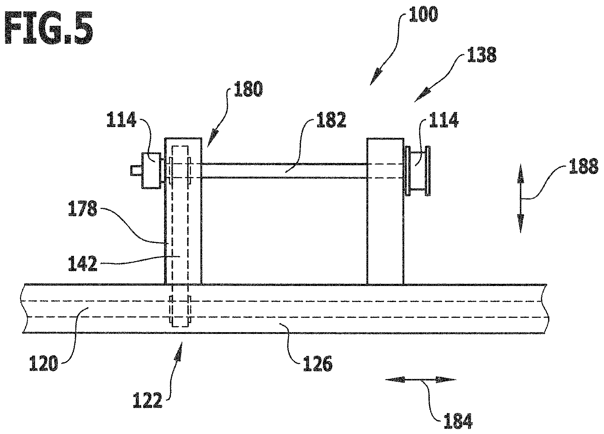

Eine in Fig. 5 dargestellte dritte Ausführungsform einer Querträgervorrichtung 138 unterscheidet sich von der in den Fig. 1 und 2 dargestellten ersten Ausführungsform im Wesentlichen dadurch, dass die Tragrollen 114 nicht unmittelbar über dem Querträger 126 angeordnet sind. Vielmehr sind Trägerelemente 178 für die Tragrollen 114 vorgesehen, welche sich ausgehend von dem Querträger 126 in vertikaler Richtung g nach oben erstrecken.

An oberen Endbereichen 180 der Trägerelemente 178 ist eine Welle 182 zur Aufnahme zweier Tragrollen 114 angeordnet.

Die Tragrollen 114 sind damit bei der in Fig. 5 dargestellten dritten Ausführungsform beabstandet von dem Querträger 126 angeordnet.

Mittels der Welle 182 sind die Tragrollen 114 drehfest miteinander verbunden.

Die Welle 182 ist dabei mit einer Kopplungselementaufnahme 140 versehen und mittels eines Kopplungselements 142 mit dem Antriebselement 120 gekoppelt, um die Tragrollen 114 mittels der Antriebsvorrichtung 116 antreiben zu können.

Im Übrigen stimmt die in Fig. 5 dargestellte dritte Ausführungsform einer Querträgervorrichtung 138 hinsichtlich Aufbau und Funktion mit der in den Fig. 1 und 2 dargestellten ersten Ausführungsform überein, so dass auf deren vorstehende Beschreibung insoweit Bezug genommen wird.

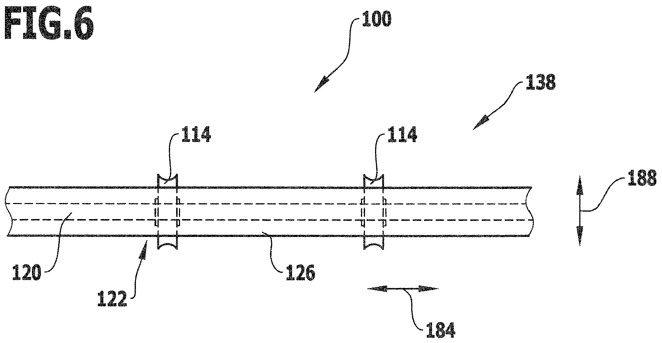

Eine in Fig. 6 dargestellte vierte Ausführungsform einer Querträgervorrichtung 138 unterscheidet sich von der in Fig. 1 und 2 dargestellten ersten Ausführungsform im Wesentlichen dadurch, dass die Tragrollen 114 direkt in den Querträger 126 integriert sind.

Die Tragrollenaufnahmen 144 sind hierzu zumindest teilweise in dem Innenraum 136 des Querträgers 126 angeordnet.

Die Tragrollen 114 sind dabei so an dem Querträger 126 angeordnet, dass sie zumindest abschnittsweise in vertikaler Richtung g durch eine Öffnung in dem Querträger 126 nach oben aus dem Querträger 126 herausragen.

Die Werkstückträger 110 können in diesem aus dem Querträger 126 herausragenden Abschnitt der Tragrollen 114 auf dieselben aufgelegt werden.

Zum Antreiben der Tragrollen 114 können diese entweder unmittelbar auf dem Antriebselement 120 angeordnet oder über eine Kopplungsvorrichtung 122 mit dem Antriebselement 120 gekoppelt sein.

Im Übrigen stimmt die in Fig. 6 dargestellte vierte Ausführungsform einer Querträgervorrichtung 138 hinsichtlich Aufbau und Funktion mit der in den Fig. 1 und 2 dargestellten ersten Ausführungsform überein, so dass auf deren vorstehende Beschreibung insoweit Bezug genommen wird.

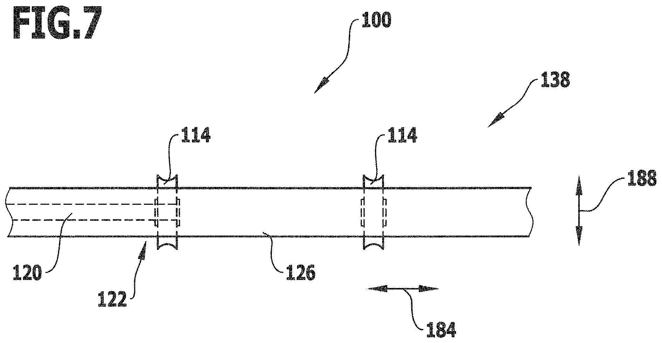

Eine in Fig. 7 dargestellte fünfte Ausführungsform einer Querträgervorrichtung 138 unterscheidet sich von der in Fig. 6 dargestellten vierten Ausführungsform im Wesentlichen dadurch, dass lediglich eine der beiden Tragrollen 114 angetrieben ist.

Das kraftübertragende Antriebselement 120 der Antriebsvorrichtung 116 erstreckt sich somit bei der in Fig. 7 dargestellten fünften Ausführungsform lediglich in einen Bereich einer der beiden Tragrollen 114.

Im Übrigen stimmt die in Fig. 7 dargestellte fünfte Ausführungsform einer Querträgervorrichtung 138 hinsichtlich Aufbau und Funktion mit der in Fig. 6 dargestellten vierten Ausführungsform überein, so dass auf deren vorstehende Beschreibung insoweit Bezug genommen wird.

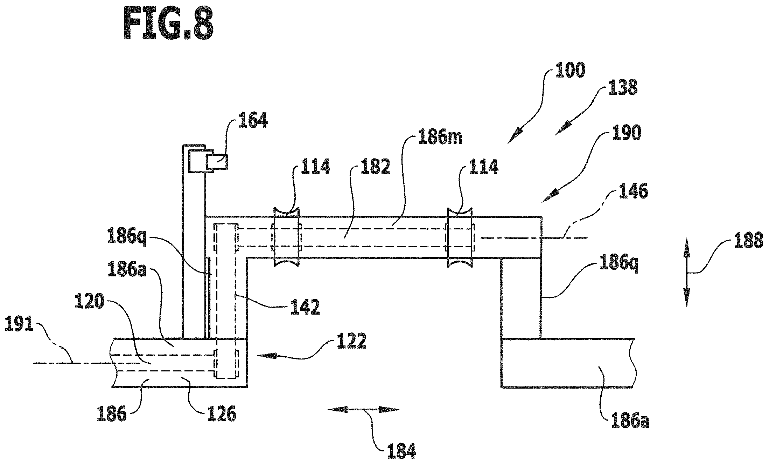

Eine in Fig. 8 dargestellte sechste Ausführungsform einer Querträgervorrichtung 138 unterscheidet sich von der in Fig. 6 dargestellten vierten Ausführungsform im Wesentlichen dadurch, dass der Querträger 126 nicht im Wesentlichen linear ausgebildet ist.

Vielmehr umfasst der Querträger 126 bei der in Fig. 8 dargestellten sechsten Ausführungsform der Querträgervorrichtung 138 drei in einer Längsrichtung 184 des Querträgers 126 hintereinander angeordnete Querträgerabschnitte 186.

Die Längsrichtung 184 des Querträgers 126 ist dabei die Richtung, in welcher der Querträger 126 seine größte Ausdehnung aufweist.

Die Längsrichtung 184 des Querträgers 126 ist dabei insbesondere parallel zur Querrichtung 132 der Beschichtungs- und/oder Bearbeitungsanlage 100.

Ein bezüglich der Längsrichtung 184 des Querträgers 126 mittig angeordneter mittlerer Querträgerabschnitt 186m ist zwischen zwei äußeren Querträgerabschnitten 186a angeordnet.

Der mittlere Querträgerabschnitt 186m ist gegenüber den äußeren Querträgerabschnitten 186a, welche im Wesentlichen längs einer gemeinsamen Linie angeordnet sind, in der vertikalen Richtung g nach oben versetzt angeordnet.

Zur Verbindung des mittleren Querträgerabschnitts 186m mit den äußeren Querträgerabschnitten 186a sind quer hierzu verlaufende Querträgerabschnitte 186q vorgesehen, welche quer, insbesondere im Wesentlichen senkrecht, zur Längsrichtung 184 des Querträgers 126 ausgerichtet sind.

Die quer verlaufenden Querträgerabschnitte 186q verlaufen somit insbesondere längs einer im Wesentlichen senkrecht zur Längsrichtung 184 des Querträgers 126 ausgerichteten Querrichtung 188 des Querträgers 126.

Die Querrichtung 188 des Querträgers 126 kann grundsätzlich horizontal oder vertikal ausgerichtet sein. In der in Fig. 8 dargestellten sechsten Ausführungsform der Querträgervorrichtung 138 ist die Querrichtung 188 des Querträgers 126 vertikal ausgerichtet.

Mittels der quer verlaufenden Querträgerabschnitte 186q und des mittleren Querträgerabschnitts 186m ist eine im Wesentlichen U-förmige Struktur 190 gebildet.

In einem der äußeren Querträgerabschnitte 186a ist das Antriebselement 120 angeordnet.

In dem mittleren Querträgerabschnitt 186m ist eine Welle 182 zur Aufnahme der beiden Tragrollen 114 angeordnet.

Sowohl das Antriebselement 120 als auch die Welle 182 erstrecken sich in der Längsrichtung 184 des Querträgers 126 bis in den Bereich eines der quer verlaufenden Querträgerabschnitte 186q.

Mittels eines Kopplungselements 142, beispielsweise eines Zahnriemens oder einer Kette, welche innerhalb des quer verlaufenden Querträgerabschnitts 186q verläuft, ist die Welle 182 zum Antreiben der Tragrollen 114 mit dem Antriebselement 120 gekoppelt.

Eine Drehachse 191 des Antriebselements 120 ist parallel zur Drehachse 146 der Tragrolle 114, jedoch versetzt zu derselben angeordnet.

Ferner ist bei der in Fig. 8 dargestellten sechsten Ausführungsform eine Sensorvorrichtung 164 zur Detektion eines Werkstückträgers 110 vorgesehen.

Im Übrigen stimmt die in Fig. 8 dargestellte sechste Ausführungsform der Querträgervorrichtung 138 hinsichtlich Aufbau und Funktion mit der in Fig. 6 dargestellten vierten Ausführungsform überein, so dass auf deren vorstehende Beschreibung insoweit Bezug genommen wird.

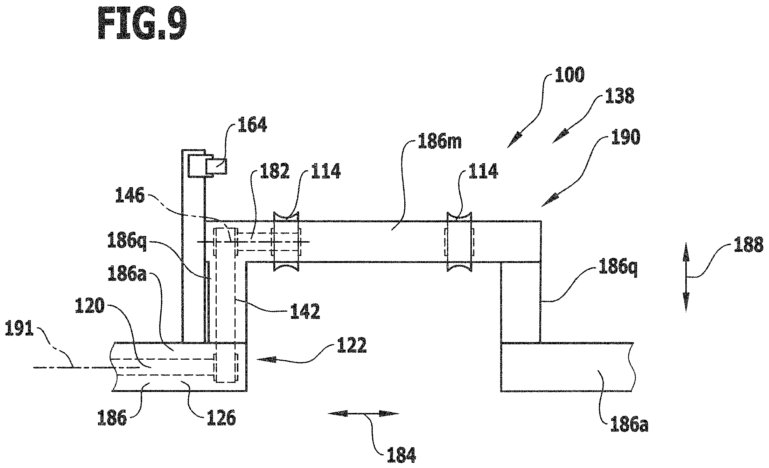

Eine in Fig. 9 dargestellte siebte Ausführungsform einer Querträgervorrichtung 138 unterscheidet sich von der in Fig. 8 dargestellten sechsten Ausführungsform im Wesentlichen dadurch, dass lediglich eine Tragrolle 114 der beiden Tragrollen 114 angetrieben ist. Die Welle 182 erstreckt sich somit lediglich von dem Bereich des quer verlaufenden Querträgerabschnitts 186q bis zu der nächstliegenden Tragrolle 114.

Die weitere Tragrolle 114 ist vorzugsweise als eine leerlaufende Tragrolle 114 ausgebildet.

Im Übrigen stimmt die in Fig. 9 dargestellte siebte Ausführungsform der Querträgervorrichtung 138 hinsichtlich Aufbau und Funktion mit der in Fig. 8 dargestellten sechsten Ausführungsform überein, so dass auf deren vorstehende Beschreibung insoweit Bezug genommen wird.

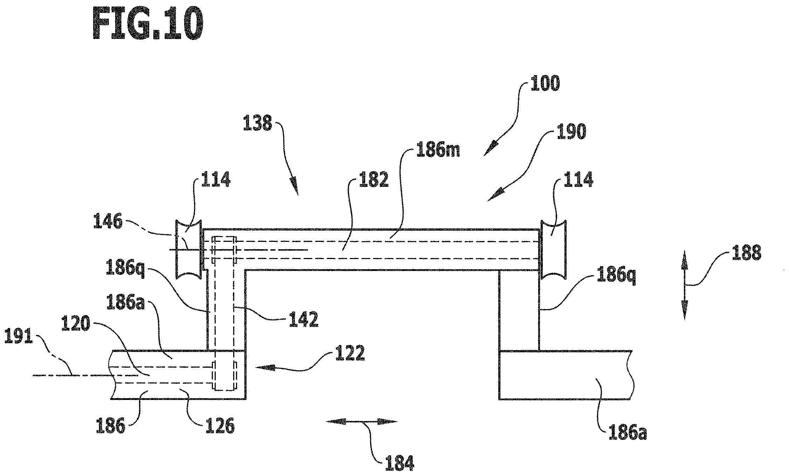

Eine in Fig. 10 dargestellte achte Ausführungsform einer Querträgervorrichtung 138 unterscheidet sich von der Fig. 8 dargestellten sechsten Ausführungsform im Wesentlichen dadurch, dass die Tragrollen 114 nicht in den mittleren Querträgerabschnitt 186m integriert sind.

Vielmehr sind die Tragrollen 114 außerhalb des Querträgers 126, nämlich zu beiden Seite des Querträgers 126, bezüglich der Längsrichtung 184 des Querträgers 126 vor und hinter dem mittleren Querträgerabschnitt 186m, angeordnet.

Im Übrigen stimmt die in Fig. 10 dargestellte achte Ausführungsform einer Querträgervorrichtung 138 hinsichtlich Aufbau und Funktion mit der in Fig. 8 dargestellten sechsten Ausführungsform überein, so dass auf deren vorstehende Beschreibung insoweit Bezug genommen wird.

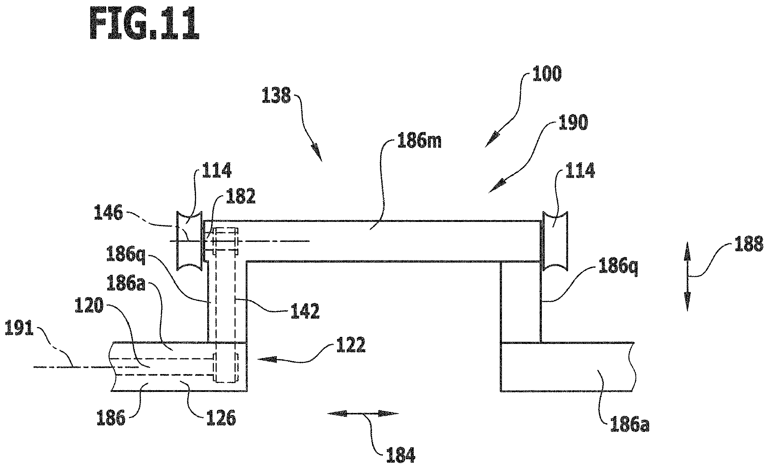

Eine in Fig. 11 dargestellte neunte Ausführungsform einer Querträgervorrichtung 138 unterscheidet sich von der in Fig. 10 dargestellten achten Ausführungsform im Wesentlichen dadurch, dass lediglich eine der Tragrollen 114 angetrieben ist. Die weitere Tragrolle 114 ist eine leerlaufende Tragrolle 114.

Im Übrigen stimmt die in Fig. 11 dargestellte neunte Ausführungsform einer Querträgervorrichtung 138 hinsichtlich Aufbau und Funktion mit der in Fig. 10 dargestellten achten Ausführungsform überein, so dass auf deren vorstehende Beschreibung insoweit Bezug genommen wird.

Bei den in den Fig. 8 bis 11 dargestellten Ausführungsformen der Querträgervorrichtung 138 ist der mittlere Querträgerabschnitt 186m stets in vertikaler Richtung g nach oben versetzt.

Bei weiteren (nicht dargestellten) Ausführungsformen von Querträgervorrichtungen 138, welche im Übrigen den in den Fig. 8 bis 11 dargestellten Ausführungsformen entsprechen können, kann vorgesehen sein, dass der mittlere Querträgerabschnitt 186m in vertikaler Richtung g nach unten versetzt ist.

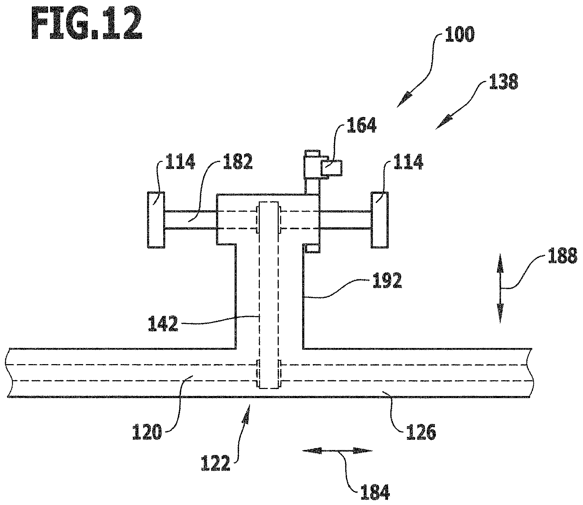

Eine in Fig. 12 dargestellte zehnte Ausführungsform einer Querträgervorrichtung 138 unterscheidet sich von der in Fig. 5 dargestellten dritten Ausführungsform im Wesentlichen dadurch, dass anstelle zweier Trägerelemente 178 eine zentrale Stützvorrichtung 192 vorgesehen ist.

Diese Stützvorrichtung 192 dient der Aufnahme einer Welle 182 zur Aufnahme der Tragrollen 114.

Innerhalb der Stützvorrichtung 192 verläuft das Kopplungselement 142 zum Antreiben der Welle 182 und somit auch der Tragrollen 114.

Im Übrigen stimmt die in Fig. 12 dargestellte zehnte Ausführungsform der Querträgervorrichtung 138 hinsichtlich Aufbau und Funktion mit der in Fig. 5 dargestellten dritten Ausführungsform überein, so dass auf deren vorstehende Beschreibung insoweit Bezug genommen wird.

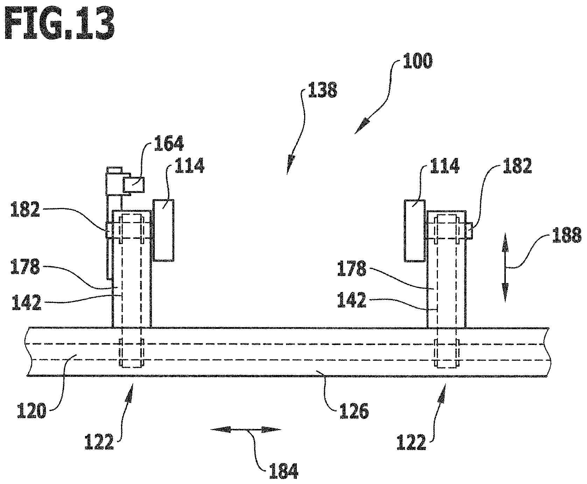

Eine in Fig. 13 dargestellte elfte Ausführungsform einer Querträgervorrichtung 138 unterscheidet sich von der in Fig. 5 dargestellten dritten Ausführungsform im Wesentlichen dadurch, dass keine gemeinsame Welle 182 vorgesehen ist, auf welcher die Tragrollen 114 angeordnet sind.

Vielmehr ist jede Tragrolle 114 mit einer separaten Welle 182 an jeweils einem der Trägerelemente 178 angeordnet.

Die Tragrollen 114 sind dabei ferner nicht an einander abgewandten Außenseiten der Trägerelemente 178, sondern an einander zugewandten Innenseiten der Trägerelemente 178 angeordnet.

Im Übrigen stimmt die in Fig. 13 dargestellte elfte Ausführungsform der Querträgervorrichtung 138 hinsichtlich Aufbau und Funktion mit der in Fig. 5 dargestellten dritten Ausführungsform überein, so dass auf deren vorstehende Beschreibung insoweit Bezug genommen wird.

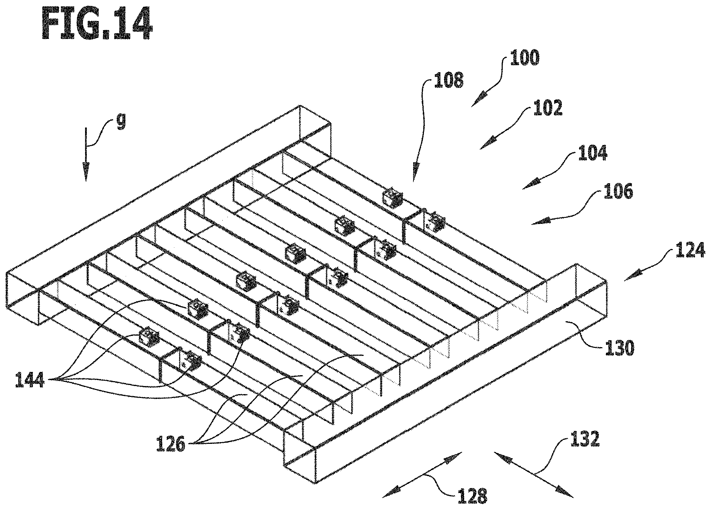

Fig. 14 ist eine der Fig. 1 entsprechende schematische perspektivische Darstellung einer alternativen Ausführungsform einer Bodengruppe 124 zu entnehmen.

Bei der in Fig. 14 dargestellten Bodengruppe 124 sind mehrere Paare von leerlaufenden Tragrollen 114 vorgesehenen. Wie insbesondere der schematischen

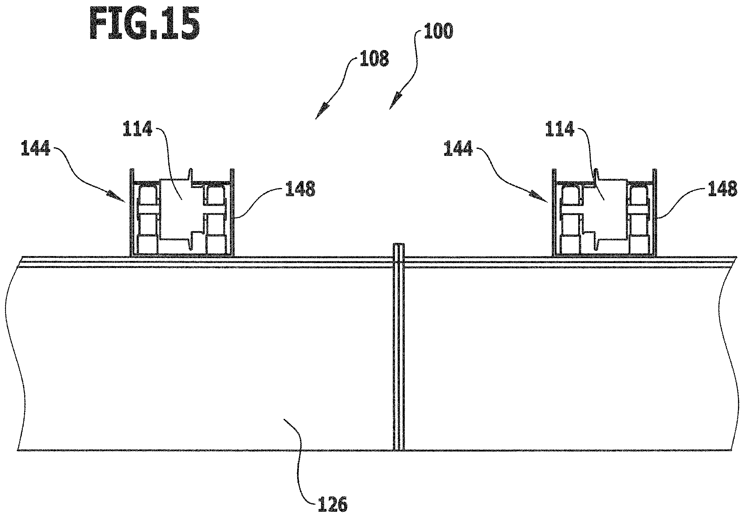

Schnittdarstellung zweier solcher Tragrollen 114 in Fig. 15 zu entnehmen ist, sind die Tragrollen 114 dabei näherungsweise gemäß der in den Fig. 1 und 2 dargestellten ersten Ausführungsform in einer Tragrollenaufnahme 144 auf dem Querträger 126 angeordnet.

Derartige leerlaufende Tragrollen 114 können insbesondere in Kombination mit angetriebenen Tragrollen 114 verwendet werden.

Bei weiteren (nicht dargestellten) Ausführungsformen von Querträgervorrichtungen 138, Bodengruppen 124 und/oder Beschichtungs- und/oder Bearbeitungsanlagen 100 können einzelne oder mehrere Merkmale von verschiedenen der vorstehend beschriebenen Ausführungsformen miteinander kombiniert werden.

Dadurch, dass bei sämtlichen Ausführungsformen das kraftübertragende Antriebselement 120 zumindest abschnittsweise in dem Innenraum 136 des Querträgers 126 angeordnet ist, ist das Antriebselement 120 vor unerwünschten Verunreinigungen geschützt. Hierdurch kann ein zuverlässiger Betrieb der Fördervorrichtung 108 gewährleistet werden.

Es kann vorgesehen sein, dass die Querträgervorrichtung 138, die Bodengruppe 124 und/oder die Beschichtungs- und/oder Bearbeitungsanlage 100 mindestens eine Positioniervorrichtung 250 umfasst.

Mittels einer solchen Positioniervorrichtung 250 können insbesondere die Werkstückträger 110 samt der daran angeordneten Werkstücke exakt positioniert werden, insbesondere exakt in einem Beschichtungs- und/oder Bearbeitungsraum 104 der Beschichtungs- und/oder Bearbeitungsanlage 100 arretiert werden.

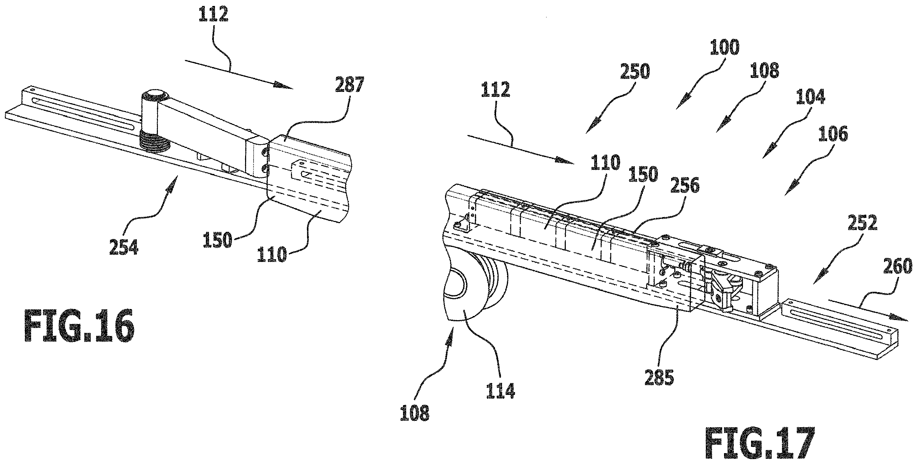

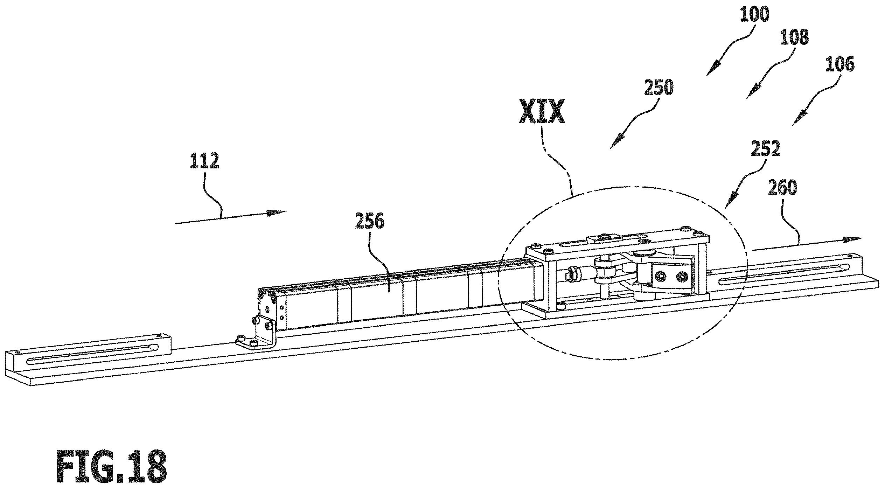

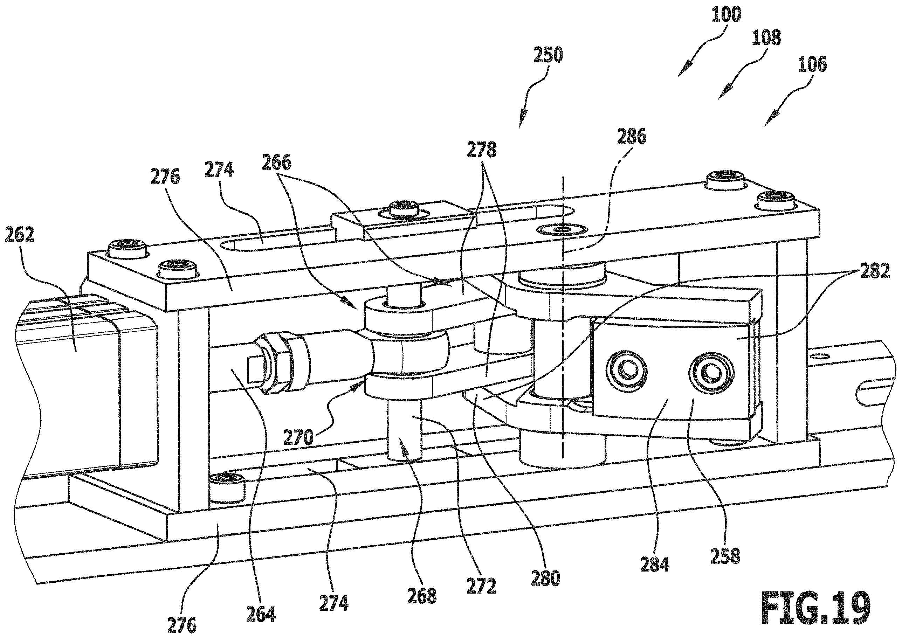

Eine in den Fig. 16 bis 21 dargestellte Ausführungsform einer Positioniervorrichtung 250 umfasst eine Schiebevorrichtung 252 und eine Blockiervorrichtung 254.

Die Schiebevorrichtung 252 umfasst eine Druckzylindervorrichtung 256, mittels welcher ein Hebelelement 258 bewegbar ist, insbesondere in einen Förderweg 260 des Werkstückträgers 110 hineinklappbar oder hineinschwenkbar ist.

Die Druckzylindervorrichtung 256 umfasst einen Druckzylinder 262 und eine Kolbenstange 264, welche in den Druckzylinder 262 hineinschiebbar oder hineinfahrbar und aus dem Druckzylinder 262 herausschiebbar oder herausziehbar ist.

Die Kolbenstange 264 der Druckzylindervorrichtung 256 ist mittels zweier Gelenkvorrichtungen 266 mit dem Hebelelement 258 verbunden.

Eine Gelenkvorrichtung 266 dient dabei als Umlenkvorrichtung 268 zur Umlenkung einer Bewegungsrichtung der Kolbenstange 264 und ist hierzu an einem dem Druckzylinder 262 abgewandten Ende 270 der Kolbenstange 264 angeordnet.

Die Umlenkvorrichtung 268 umfasst eine Querstange 272, an welcher die Kolbenstange 264 angreift und welche längs zweier Führungsschlitze 274 in zwei einander gegenüberliegenden Führungselementen 276 der Druckzylindervorrichtung 256 längs der Förderrichtung 112 und entgegen der Förderrichtung 112 bewegbar ist.

Die Querstange 272 ist mittels zweier Übertragungselemente 278 mit einem Verbindungsabschnitt 280 des Hebelelements 258 schwenkbar verbunden. Mittels der Übertragungselemente 278 und des Hebelelements 258 ist somit die weitere Gelenkvorrichtung 266 gebildet.

Das Hebelelement 258 umfasst zwei Hebelarme 282.

Ein Hebelarm 282 bildet den Verbindungsabschnitt 280.

Der weitere Hebelarm 282 bildet einen Angriffsabschnitt 284 des Hebelelements 258, mittels welchem die Schiebevorrichtung 252 an dem Werkstückträger 110, insbesondere an einem bezüglich der Förderrichtung 112 vorderen Ende 285 des Werkstückträgers 110, angreifen kann.

Mittels der Druckzylindervorrichtung 256 ist das Hebelelement 258 um eine insbesondere vertikal ausgerichtete Rotationsachse 286 schwenkbar.

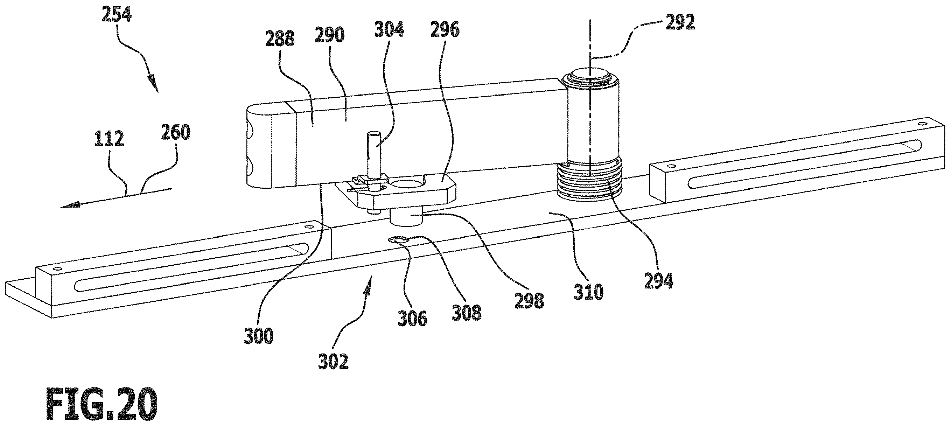

Die Blockiervorrichtung 254 umfasst ein Blockierelement 288, welches beispielsweise als eine Sperrklinke 290 ausgebildet ist (siehe Fig. 20).

Das Blockierelement 288 ist um eine beispielsweise vertikal ausgerichtete Rotationsachse 292 schwenkbar gelagert.

Insbesondere ist das Blockierelement 288 in den Förderweg 260 des Werkstückträgers 110 hineinschwenkbar.

Das Blockierelement 288 ist mit einer Feder 294 versehen.

Mittels der Feder 294 wird das Blockierelement 288 in einer in Fig. 20 dargestellten Blockierstellung gehalten.

Ein weitergehendes Verschwenken in den Förderweg 260 wird mittels eines an dem Blockierelement 288 angeordneten Arretierelements 296 sowie mittels eines hierzu korrespondierenden Zapfens 298 der Blockiervorrichtung 254 verhindert.

Das Arretierelement 296 ist beispielsweise ein U-förmiges Element, welches an einer Unterseite 300 des Blockierelements 288 angeordnet, insbesondere angeschweißt, und mit dem Zapfen 298 in Eingriff bringbar ist.

Die Blockiervorrichtung 254 umfasst ferner eine Verriegelungsvorrichtung 302, mittels welcher das Blockierelement 288 in einer aus dem Förderweg 260 herausgeschwenkten Stellung (nicht dargestellt) arretierbar ist.

Die Verriegelungsvorrichtung 302 umfasst insbesondere einen an dem Arretierelement 296 angeordneten Pin 304, welcher in der aus dem Förderweg 260 herausgeschwenkten Stellung des Blockierelements 288 mit einer Öffnung 306 oder Vertiefung 308 der Verriegelungsvorrichtung 302, insbesondere einer Öffnung 306 oder Vertiefung 308 in einer Grundplatte 310, in Eingriff bringbar ist.

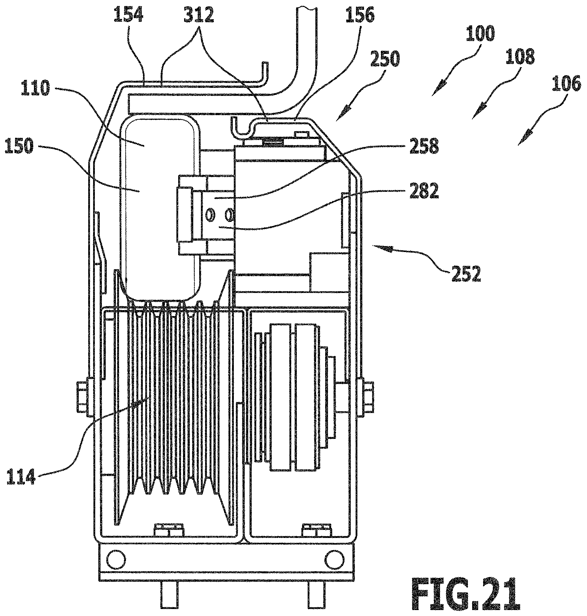

Wie insbesondere Fig. 21 zu entnehmen ist, ist die Positioniervorrichtung 250 vorzugsweise innerhalb oder zumindest unter einer Abdeckungsvorrichtung 312 angeordnet.

Mittels der Abdeckungsvorrichtung 312 kann die Positioniervorrichtung 250 insbesondere vor einer unerwünschten Verunreinigung geschützt werden.

Die Abdeckungsvorrichtung 312 dient vorzugsweise ferner der zumindest teilweisen Abdeckung des Werkstückträgers 110.

Insbesondere kann mittels der Abdeckungsvorrichtung 312 mindestens eine Kufe 150 eines als Skid ausgebildeten Werkstückträgers 110 abgedeckt werden, um diese vor einer unerwünschten Verunreinigung zu schützen.

Der Reinigungs- und Wartungsbedarf der Positioniervorrichtung 250 und/oder des Werkstückträgers 110 kann hierdurch vorzugsweise reduziert werden.

Die Abdeckungsvorrichtung 312 ist vorzugsweise die Kufenabdeckung 152 und umfasst insbesondere die obere Abdeckung 154 und die untere Abdeckung 156.

Insbesondere ist die Positioniervorrichtung 250 längs der Förderrichtung 112 versetzt vor oder hinter einer Sensorvorrichtung 164 angeordnet (siehe Fig. 2).

Die in den Fig. 16 bis 21 dargestellte Ausführungsform der Positioniervorrichtung 250 funktioniert wie folgt:
Im Betrieb der Fördervorrichtung 108 wird der Werkstückträger 110 samt des daran angeordneten Werkstücks längs der Förderrichtung 112 bewegt.

Um den Werkstückträger 110 samt des daran angeordneten Werkstücks in einer gewünschten Position zu arretieren, insbesondere in einem Beschichtungs- und/oder Bearbeitungsbereich 106 festzulegen, wird der Werkstückträger 110 samt des daran angeordneten Werkstücks zunächst an der Blockiervorrichtung 254 vorbeibewegt.

Die Blockiervorrichtung 254 ist hierzu vorzugsweise monodirektional sperrend ausgebildet und ermöglicht ein Vorbeibewegen des Werkstückträgers 110 an der Blockiervorrichtung 254 in der Förderrichtung 112.

Das Blockierelement 288 wird hierbei um die Rotationsachse 292 verschwenkt und dabei aus dem Förderweg 260 herausbewegt.

Sobald der Werkstückträger 110 an der Blockervorrichtung 254 vorbeibewegt wurde, wird das Blockierelement 288 aufgrund der Wirkung der Feder 294 erneut in den Förderweg 260 zurückgeschwenkt.

Durch die Ausgestaltung des Blockierelements 288 kann in diesem nun erhaltenen Zustand eine Bewegung des Werkstückträgers 110 entgegen der Förderrichtung 112 verhindert werden.

Nachdem der Werkstückträger 110 an der Blockiervorrichtung 254 vorbeibewegt wurde und die Blockiervorrichtung 254, insbesondere das Blockierelement 288, in die beispielsweise in Fig. 16 dargestellte blockierende Stellung zurückgekehrt ist, kommt das bezüglich der Förderrichtung 112 vordere Ende 285 einer Kufe 150 des Werkstückträgers 110 an dem Angriffsabschnitt 284 des Hebelelements 258 der Schiebevorrichtung 252 zum Anschlag.

Der Werkstückträger 110 wird hierdurch vorzugsweise zum Stillstand gebracht.

Eine exakte Positionierung des Werkstückträgers 110 erfolgt nun durch Betätigung der Druckzylindervorrichtung 256.

Hierbei wird die Kolbenstange 264 aus dem Druckzylinder 262 herausgeschoben oder herausgedrückt und dadurch das Hebelelement 258 um die Rotationsachse 286 geschwenkt.

Der Angriffsabschnitt 284 bewegt sich dabei entgegen der Förderrichtung 112 und schiebt den an dem Angriffsabschnitt 284 anliegenden Werkstückträger 110 entgegen der Förderrichtung 112 soweit zurück, bis dieser mit seinem bezüglich der Förderrichtung 112 hinteren Ende 287 an dem Blockierelement 288 der Blockiervorrichtung 254 zur Anlage kommt.

Der Werkstückträger 110 ist dann zwischen das Blockierelement 288 und das Hebelelement 258, das heißt zwischen die Blockiervorrichtung 254 und die Schiebevorrichtung 252, eingeklemmt und damit in einer gewünschten Position arretiert.

In dieser gewünschten Position kann insbesondere eine Behandlung und/oder Bearbeitung des an dem Werkstückträger 110 angeordneten Werkstücks erfolgen.

Mittels der Positioniervorrichtung 250 ist der Werkstückträger 110 samt des daran angeordneten Werkstücks insbesondere in einem Beschichtungs- und/oder Bearbeitungsbereich 106 der Beschichtungs- und/oder Bearbeitungsanlage 100 in einer vorgegebenen Position festlegbar.

Um den Werkstückträger 110 samt des daran angeordneten Werkstücks längs der Förderrichtung 112 weiter fördern zu können, insbesondere nachdem ein Beschichtungs- und/oder Bearbeitungsvorgang durchgeführt wurde, wird die Druckzylindervorrichtung 256 erneut betätigt. Dabei wird die Kolbenstange 264 in den Druckzylinder 262 zurückgezogen und hierdurch das Hebelelement 258 aus dem Förderweg 260 entfernt.

Der Werkstückträger 110 kann dann in der Förderrichtung 112 an der Schiebevorrichtung 252 vorbeibewegt werden.

Bei einer weiteren (nicht dargestellten) Ausführungsform einer Positioniervorrichtung 250 kann vorgesehen sein, dass die Kolbenstange 264 unmittelbar mit dem Verbindungsabschnitt 280 des Hebelelements 258 verbunden ist. Durch eine solche Ausgestaltung der Positioniervorrichtung 250 kann diese vorzugsweise mit einer geringeren Anzahl an Bauteilen realisiert werden.

## Patentansprüche

1. Querträgervorrichtung für eine Bodengruppe (124) eines Beschichtungs- und/oder Bearbeitungsraums (104), umfassend:
- einen Querträger (126), welcher einen Innenraum (136) aufweist;
- ein kraftübertragendes Antriebselement (120) einer Antriebsvorrichtung (116) zum Antreiben einer Tragrolle (114) einer Fördervorrichtung (108) zum Fördern von Werkstücken,
wobei das Antriebselement (120) zumindest abschnittsweise in dem Innenraum (136) des Querträgers (126) angeordnet ist,
**dadurch gekennzeichnet,**
**dass** eine Drehachse (146) der Tragrolle (114) gegenüber einer Drehachse (191) des Antriebselements (120) in einer vertikalen Richtung versetzt angeordnet ist.

2. Querträgervorrichtung nach Anspruch 1, **dadurch gekennzeichnet, dass** die Querträgervorrichtung (138) eine Tragrollenaufnahme (144) für eine Tragrolle (114) der Fördervorrichtung (108) umfasst.

3. Querträgervorrichtung nach einem der Ansprüche 1 oder 2, **dadurch gekennzeichnet, dass** der Querträger (126) mindestens zwei bezüglich einer Längsrichtung (184) des Querträgers (126) hintereinander angeordnete Querträgerabschnitte (186) aufweist, welche in einer quer zur Längsrichtung (184) verlaufenden Querrichtung (188) des Querträgers (126) versetzt zueinander angeordnet sind.

4. Querträgervorrichtung nach einem der Ansprüche 1 bis 3, **dadurch gekennzeichnet, dass** der Querträger (126) einen quer zu einer Längsrichtung (184) des Querträgers (126) verlaufenden Querträgerabschnitt (186q) aufweist.

5. Querträgervorrichtung nach Anspruch 4, **dadurch gekennzeichnet, dass** der Querträger (126) zwei quer zu einer Längsrichtung (184) des Querträgers (126) verlaufende Querträgerabschnitte (186q) und einen bezüglich einer senkrecht zur Längsrichtung (184) verlaufenden Querrichtung (188) versetzt angeordneten, parallel zur Längsrichtung verlaufenden Querträgerabschnitt (186m) umfasst, welcher zwischen den zwei quer zur Längsrichtung (184) des Querträgers (126) verlaufenden Querträgerabschnitten (186q) angeordnet ist.

6. Querträgervorrichtung nach einem der Ansprüche 1 bis 5, **dadurch gekennzeichnet, dass** die Querträgervorrichtung (138) eine Tragrolle (114) der Fördervorrichtung (108) und eine Kopplungsvorrichtung (122) zum Koppeln der Tragrolle (114) mit dem Antriebselement (120) umfasst.

7. Querträgervorrichtung nach einem der Ansprüche 1 bis 6, **dadurch gekennzeichnet, dass** die Querträgervorrichtung (138) eine Tragrolle (114) der Fördervorrichtung (108) umfasst, wobei eine Drehachse (146) der Tragrolle (114) gegenüber einer Drehachse (191) des Antriebselements (120) in einer senkrecht zu einer Längsrichtung (184) des Querträgers (126) verlaufenden Querrichtung (188) des Querträgers (126) versetzt angeordnet ist.

8. Querträgervorrichtung nach einem der Ansprüche 1 bis 7, **dadurch gekennzeichnet, dass** die Querträgervorrichtung (138) mindestens zwei Tragrollen (114) und/oder mindestens zwei zumindest abschnittsweise in dem Innenraum (136) des Querträgers (126) angeordnete kraftübertragende Antriebselemente (120) umfasst.

9. Querträgervorrichtung nach einem der Ansprüche 1 bis 8, **dadurch gekennzeichnet, dass** die Querträgervorrichtung (138) eine Lagervorrichtung (168) zur drehbaren Lagerung des kraftübertragenden Antriebselements (120) umfasst.

10. Querträgervorrichtung nach einem der Ansprüche 1 bis 9, **dadurch gekennzeichnet, dass** das Antriebselement (120) als eine Welle (182) ausgebildet ist.

11. Querträgervorrichtung nach einem der Ansprüche 1 bis 10, **dadurch gekennzeichnet, dass** die Querträgervorrichtung (138) ein Paar von Tragrollen (114) umfasst, wobei eine oder beide Tragrollen (114) des Paars von Tragrollen (114) zum Antreiben derselben mit dem Antriebselement (120) verbunden sind.

12. Querträgervorrichtung nach einem der Ansprüche 1 bis 11, **dadurch gekennzeichnet, dass** die Querträgervorrichtung (138) ein Paar von Tragrollen (114) umfasst, wobei die beiden Tragrollen (114) des Paars von Tragrollen (114) mittels einer gemeinsamen Welle (182) drehfest miteinander verbunden sind.

13. Querträgervorrichtung nach einem der Ansprüche 1 bis 12, **dadurch gekennzeichnet, dass** die Fördervorrichtung (108) eine Positioniervorrichtung (250) zum Positionieren eines Werkstückträgers (110) samt eines oder der mehrerer daran angeordneter Werkstücke umfasst, welche eine Schiebevorrichtung (252) und/oder eine Blockiervorrichtung (254) umfasst.

14. Querträgervorrichtung nach Anspruch 13, **dadurch gekennzeichnet, dass** der Werkstückträger (110) samt des einen oder der mehreren daran angeordneten Werkstücke mittels der Schiebevorrichtung (252) in einer einer Förderrichtung (112) der Fördervorrichtung (108) entgegengesetzten Richtung bewegbar ist und/oder dass die Blockiervorrichtung (254) monodirektional blockierend ausgebildet ist, so dass der Werkstückträger (110) samt des einen oder der mehreren daran angeordneten Werkstücke in der Förderrichtung (112) an der Blockiervorrichtung (254) vorbeibewegbar ist, eine Bewegung des Werkstückträgers (110) samt des einen oder der mehreren daran angeordneten Werkstücke in einer der Förderrichtung (112) entgegengesetzten Richtung jedoch blockierbar ist.

15. Querträgervorrichtung nach einem der Ansprüche 13 oder 14, **dadurch gekennzeichnet, dass** die Schiebevorrichtung (252) und/oder die Blockiervorrichtung (254) zumindest abschnittsweise innerhalb und/oder unter einer Abdeckungsvorrichtung (312) zur Abdeckung von Auflageelementen (150) des Werkstückträgers (110) angeordnet ist.

16. Bodengruppe für einen Beschichtungs- und/oder Bearbeitungsraum (104), umfassend mindestens eine Querträgervorrichtung (138) nach einem der Ansprüche 1 bis 15.

17. Bodengruppe nach Anspruch 16, **dadurch gekennzeichnet, dass** die Bodengruppe (124) eine Querträgervorrichtung (138) umfasst und zusätzlich einen Querträger (126), an dem eine Tragrolle (114) der Fördervorrichtung (108) angeordnet ist, wobei die Tragrolle (114) mittels des Antriebselements (120) der Querträgervorrichtung (138) antreibbar ist.

18. Beschichtungs- und/oder Bearbeitungsanlage zum Beschichten und/oder Bearbeiten von Werkstücken, umfassend:
- eine Fördervorrichtung (108) zum Fördern der Werkstücke durch einen Beschichtungs- und/oder Bearbeitungsbereich (106) der Beschichtungs- und/oder Bearbeitungsanlage (100) mittels Werkstückträgern (110) längs einer Förderrichtung (112) der Fördervorrichtung (108), wobei die Fördervorrichtung (108) eine Tragrolle (114) umfasst, auf welcher ein Werkstückträger (110) zum Fördern desselben anordenbar ist;
- eine Antriebsvorrichtung (116) zum Antreiben der Tragrolle (114) der Fördervorrichtung (108), wobei die Antriebsvorrichtung (116) ein kraftübertragendes Antriebselement (120) umfasst,
wobei das kraftübertragende Antriebselement (120) zumindest abschnittsweise in einem Innenraum (136) eines Querträgers (126) einer Bodengruppe (124) der Beschichtungs- und/oder Bearbeitungsanlage (100) angeordnet ist, wobei die Bodengruppe (124) eine Bodengruppe (124) nach einem der Ansprüche 16 oder 17 ist.

## Claims

1. A crossmember device for a floor unit (124) of a coating and/or processing chamber (104), including:
- a crossmember (126) which comprises an interior (136) ;
- a force-transmitting drive element (120) of a drive device (116) for driving a load-bearing roller (114) of a conveying device (108) for conveying workpieces,
wherein the drive element (120) is arranged at least in portions in the interior (136) of the crossmember (126),
**characterized in that**
a rotational axis (146) of the load-bearing roller (114) is offset in a vertical direction with respect to a rotational axis (191) of the drive element (120).

2. The crossmember device as claimed in claim 1, **characterized in that** the crossmember device (138) includes a load-bearing roller receiving means (144) for a load-bearing roller (114) of the conveying device (108).

3. The crossmember device as claimed in either of claims 1 or 2, **characterized in that** the crossmember (126) comprises at least two crossmember portions (186) which are arranged one behind another with reference to a longitudinal direction (184) of the crossmember (126) and are arranged offset with respect to one another in a transverse direction (188) of the crossmember (126) which extends transversely with respect to the longitudinal direction (184).

4. The crossmember device as claimed in one of claims 1 to 3, **characterized in that** the crossmember (126) comprises a crossmember portion (186q) which extends transversely with respect to a longitudinal direction (184) of the crossmember (126).

5. The crossmember device as claimed in claim 4, **characterized in that** the crossmember (126) includes two crossmember portions (186q) which extend transversely with respect to a longitudinal direction (184) of the crossmember (126) and one crossmember portion (186m) which is arranged offset with reference to a transverse direction (188) which extends perpendicularly to the longitudinal direction (184), extends parallel to the longitudinal direction and is arranged between the two crossmember portions (186q) which extend transversely with respect to the longitudinal direction (184) of the crossmember (126).

6. The crossmember device as claimed in one of claims 1 to 5, **characterized in that** the crossmember device (138) includes a load-bearing roller (114) of the conveying device (108) and a coupling device (122) for coupling the load-bearing roller (114) with the drive element (120).

7. The crossmember device as claimed in one of claims 1 to 6, **characterized in that** the crossmember device (138) includes a load-bearing roller (114) of the conveying device (108), wherein a rotational axis (146) of the load-bearing roller (114) is arranged offset in relation to a rotational axis (191) of the drive element (120) in a transverse direction (188) of the crossmember (126) which extends perpendicularly to a longitudinal direction (184) of the crossmember (126).

8. The crossmember device as claimed in one of claims 1 to 7, **characterized in that** the crossmember device (138) includes at least two load-bearing rollers (114) and/or at least two force-transmitting drive elements (120) which are arranged at least in portions in the interior (136) of the crossmember (126).

9. The crossmember device as claimed in one of claims 1 to 8, **characterized in that** the crossmember device (138) includes a bearing device (168) for the rotatable bearing arrangement of the force-transmitting drive element (120).

10. The crossmember device as claimed in one of claims 1 to 9, **characterized in that** the drive element (120) is realized as a shaft (182).

11. The crossmember device as claimed in one of claims 1 to 10, **characterized in that** the crossmember device (138) includes a pair of load-bearing rollers (114), wherein one or both of the load-bearing rollers (114) of the pair of load-bearing rollers (114) are connected to the drive element (120) for driving the same.

12. The crossmember device as claimed in one of claims 1 to 11, **characterized in that** the crossmember device (138) includes a pair of load-bearing rollers (114), wherein the two load-bearing rollers (114) of the pair of load-bearing rollers (114) are connected non-rotatably together by means of a common shaft (182).

13. The crossmember device as claimed in one of claims 1 to 12, **characterized in that** the conveying device (108) includes a positioning device (250) for positioning a workpiece carrier (110) along with the one or the several workpieces arranged thereon, said positioning device (250) including a pushing device (252) and/or a blocking device (254).

14. The crossmember device as claimed in claim 13, **characterized in that** the workpiece carrier (110) along with the one or the several workpieces arranged thereon is movable by means of the pushing device (252) in a direction opposite to a conveying direction (112) of the conveying device (108) and/or **in that** the blocking device (254) is realized so as to block in a single direction such that the workpiece carrier (110) along with the one or the several workpieces arranged thereon can be moved past the blocking device (254) in the conveying direction (112), but a movement of the workpiece carrier (110) along with the one or the several workpieces arranged thereon in a direction opposite the conveying direction (112) can be blocked.

15. The crossmember device as claimed in either of claims 13 or 14, **characterized in that** the pushing device (252) and/or the blocking device (254) is arranged at least in portions inside and/or below a covering device (312) for covering supporting elements (150) of the workpiece carrier (110).

16. A floor unit for a coating and/or processing chamber (104), including at least one crossmember device (138) as claimed in one of claims 1 to 15.

17. The floor unit as claimed in claim 16, **characterized in that** the floor unit (124) includes a crossmember device (138) and in addition a crossmember (126) on which a load-bearing roller (114) of the conveying device (108) is arranged, wherein the load-bearing roller (114) is drivable by means of the drive element (120) of the crossmember device (138).

18. A coating and/or processing installation for coating and/or processing workpieces, including:
- a conveying device (108) for conveying the workpieces through a coating and/or processing region (106) of the coating and/or processing installation (100) by means of workpiece carriers (110) along a conveying direction (112) of the conveying device (108), wherein the conveying device (108) includes a load-bearing roller (114) on which a workpiece carrier (110) can be arranged for conveying the same;
- a drive device (116) for driving the load-bearing roller (114) of the conveying device (108), wherein the drive device (116) includes a force-transmitting drive element (120), wherein the force-transmitting drive element (120) is arranged at least in portions in an interior (136) of a crossmember (126) of a floor unit (124) of the coating and/or processing installation (100).

## Revendications

1. Dispositif de traverse pour un bloc de plancher (124) d'un espace de revêtement et/ou d'usinage (104), comprenant :
- une traverse (126) qui présente un espace intérieur (136) ;
- un élément d'entraînement (120) à transmission de force d'un dispositif d'entraînement (116) pour l'entraînement d'un rouleau porteur (114) d'un dispositif de transport (108) pour le transport de pièces à usiner,
dans lequel l'élément d'entraînement (120) est agencé au moins par sections dans l'espace intérieur (136) de la traverse (126),
**caractérisé en ce que**
un axe de rotation (146) du rouleau porteur (114) est agencé, par rapport à un axe de rotation (191) de l'élément d'entraînement (120), en déport dans un sens vertical.

2. Dispositif de traverse selon la revendication 1, **caractérisé en ce que** le dispositif de traverse (138) comporte un logement de rouleau porteur (144) pour un rouleau porteur (114) du dispositif de transport (108).

3. Dispositif de traverse selon l'une des revendications 1 ou 2, **caractérisé en ce que** la traverse (126) présente au moins deux sections de traverse (186) agencées l'une derrière l'autre par rapport à un sens longitudinal (184) de la traverse (126), lesquelles sont agencées en déport l'une de l'autre dans un sens transversal (188) s'étendant transversalement au sens longitudinal (184) de la traverse (126).

4. Dispositif de traverse selon l'une des revendications 1 à 3, **caractérisé en ce que** la traverse (126) présente une section de traverse (186q) s'étendant transversalement à un sens longitudinal (184) de la traverse (126).

5. Dispositif de traverse selon la revendication 4, **caractérisé en ce que** la traverse (126) comporte deux sections de traverse (186q) s'étendant transversalement à un sens longitudinal (184) de la traverse (126) et une section de traverse (186m) s'étendant parallèlement au sens longitudinal, agencée en déport par rapport à un sens transversal (188) s'étendant perpendiculairement au sens longitudinal (184), laquelle est agencée entre les deux sections de traverse (186q) s'étendant transversalement au sens longitudinal (184) de la traverse (126).

6. Dispositif de traverse selon l'une des revendications 1 à 5, **caractérisé en ce que** le dispositif de traverse (138) comporte un rouleau porteur (114) du dispositif de transport (108) et un dispositif de couplage (122) pour le couplage du rouleau porteur (114) avec l'élément d'entraînement (120).

7. Dispositif de traverse selon l'une des revendications 1 à 6, **caractérisé en ce que** le dispositif de traverse (138) comporte un rouleau porteur (114) du dispositif de transport (108), dans lequel un axe de rotation (146) du rouleau porteur (114) est agencé en déport par rapport à un axe de rotation (191) de l'élément d'entraînement (120) dans un sens transversal (188) de la traverse (126) s'étendant perpendiculairement à un sens longitudinal (184) de la traverse (126).

8. Dispositif de traverse selon l'une des revendications 1 à 7, **caractérisé en ce que** le dispositif de traverse (138) comporte au moins deux rouleaux porteurs (114) et/ou au moins deux éléments d'entraînement (120) à transmission de force agencés au moins par sections dans l'espace intérieur (136) de la traverse (126).

9. Dispositif de traverse selon l'une des revendications 1 à 8, **caractérisé en ce que** le dispositif de traverse (138) comporte un dispositif de palier (168) pour le logement rotatif de l'élément d'entraînement (120) à transmission de force.

10. Dispositif de traverse selon l'une des revendications 1 à 9, **caractérisé en ce que** l'élément d'entraînement (120) est réalisé comme un arbre (182).

11. Dispositif de traverse selon l'une des revendications 1 à 10, **caractérisé en ce que** le dispositif de traverse (138) comporte une paire de rouleaux porteurs (114), dans lequel un ou les deux rouleaux porteurs (114) de la paire de rouleaux porteurs (114) sont reliés pour l'entraînement de ceux-ci à l'élément d'entraînement (120).

12. Dispositif de traverse selon l'une des revendications 1 à 11, **caractérisé en ce que** le dispositif de traverse (138) comporte une paire de rouleaux porteurs (114), dans lequel les deux rouleaux porteurs (114) de la paire de rouleaux porteurs (114) sont reliés l'un à l'autre avec blocage en rotation à l'aide d'un arbre commun (182).

13. Dispositif de traverse selon l'une des revendications 1 à 12, **caractérisé en ce que** le dispositif de transport (108) comporte un dispositif de positionnement (250) pour le positionnement d'un support de pièces à usiner (110) avec l'une ou les plusieurs pièces à usiner agencées sur celui-ci, lequel comporte un dispositif de coulissement (252) et/ou un dispositif de blocage (254).

14. Dispositif de traverse selon la revendication 13, **caractérisé en ce que** le support de pièces à usiner (110) avec l'une ou les plusieurs pièces à usiner agencées sur celui-ci est mobile à l'aide du dispositif de coulissement (252) dans un sens opposé d'un sens de transport (112) du dispositif de transport (108) et/ou **en ce que** le dispositif de blocage (254) est réalisé par blocage monodirectionnel de sorte que le support de pièces à usiner (110) puisse être mobile devant le dispositif de blocage (254) avec l'une ou les plusieurs pièces à usiner agencées sur celui-ci dans le sens de transport (112), mais qu'un mouvement du support de pièces à usiner (110) avec l'une ou les plusieurs pièces à usiner agencées sur celui-ci puisse toutefois être bloqué dans un sens opposé au sens de transport (112).

15. Dispositif de traverse selon l'une des revendications 13 ou 14, **caractérisé en ce que** le dispositif de coulissement (252) et/ou le dispositif de blocage (254) est agencé au moins par sections dans et/ou sous un dispositif de recouvrement (312) pour le recouvrement d'éléments d'appui (150) du support de pièces à usiner (110).

16. Bloc de plancher pour un espace de revêtement et/ou d'usinage (104) comprenant au moins un dispositif de traverse (138) selon l'une des revendications 1 à 15.

17. Bloc de plancher selon la revendication 16, **caractérisé en ce que** le bloc de plancher (124) comporte un dispositif de traverse (138) et en outre une traverse (126), sur laquelle est agencé un rouleau porteur (114) du dispositif de transport (108), dans lequel le rouleau porteur (114) peut être entraîné à l'aide de l'élément d'entraînement (120) du dispositif de traverse (138).

18. Installation de revêtement et/ou d'usinage pour le revêtement et/ou l'usinage de pièces à usiner, comprenant :
- un dispositif de transport (108) pour le transport des pièces à usiner par une zone de revêtement et/ou d'usinage (106) de l'installation de revêtement et/ou d'usinage (100) à l'aide de supports de pièces à usiner (110) le long d'un sens de transport (112) du dispositif de transport (108), dans laquelle le dispositif de transport (108) comporte un rouleau porteur (114), sur lequel un support de pièces à usiner (110) peut être agencé pour le transport de celui-ci ;
- un dispositif d'entraînement (116) pour l'entraînement du rouleau porteur (114) du dispositif de transport (108), dans laquelle le dispositif d'entraînement (116) comporte un élément d'entraînement (120) à transmission de force,
dans laquelle l'élément d'entraînement (120) à transmission de force est agencé au moins par sections dans un espace intérieur (136) d'une traverse (126) d'un bloc de plancher (124) de l'installation de revêtement et/ou d'usinage (100), dans laquelle le bloc de plancher (124) est un bloc de plancher (124) selon l'une des revendications 16 ou 17.
